(19) Europäisches Patentamt
European Patent Office
Office européen des brevets

(11) EP 0 453 966 B1

(12) # EUROPÄISCHE PATENTSCHRIFT

(45) Veröffentlichungstag und Bekanntmachung des Hinweises auf die Patenterteilung:
**26.02.1997 Patentblatt 1997/09**

(51) Int Cl.[6]: **G02F 1/1337**

(21) Anmeldenummer: **91106265.1**

(22) Anmeldetag: **18.04.1991**

(54) **Ferroelektrisches Flüssigkristalldisplay mit hohem Kontrast und hoher Helligkeit**

Ferroelectric liquid crystal display with high contrast and high brightness

Afficheur à cristal liquide ferroélectrique à contraste élevé et à haute luminosité

(84) Benannte Vertragsstaaten:
**DE FR GB IT**

(30) Priorität: **21.04.1990 DE 4012750**

(43) Veröffentlichungstag der Anmeldung:
**30.10.1991 Patentblatt 1991/44**

(73) Patentinhaber: **HOECHST AKTIENGESELLSCHAFT**
**65926 Frankfurt am Main (DE)**

(72) Erfinder:
- **Dübal, Hans-Rolf, Dr.**
  **W-6240 Königstein/Taunus (DE)**
- **Harada, Takamasa**
  **Inbagun, Chiba (JP)**
- **Rieger, Heinz, Dr.**
  **W-6238 Hofheim am Taunus (DE)**
- **Rösch, Norbert, Dr.**
  **W-6000 Frankfurt am Main (DE)**
- **Wegener, Peter, Dr.**
  **W-6240 Königstein/Taunus (DE)**

(56) Entgegenhaltungen:
**EP-A- 0 362 861** **FR-A- 2 240 763**
**FR-A- 2 332 550**

- **PATENT ABSTRACTS OF JAPAN vol. 3, no. 113 (E-139) 19. September 1979 ; & JP-A-54 091 253**
- **PATENT ABSTRACTS OF JAPAN vol. 12, no. 104 (P-685) 6. April 1988 ; & JP-A-62 237 431**
- **WORLD PATENTS INDEX LATEST Week 8743, Derwent Publications Ltd., London, GB; AN 87-302394/43; & JP-A-62 211 617**
- **PATENT ABSTRACTS OF JAPAN vol. 9, no. 246 (P-393)(1969) 3. Okfober 1985 ; & JP-A-60 097 324**
- **JAPANESE JOURNAL OF APPLIED PHYSICS, Band 28, Nr. 3, März 1989, Seiten L483-L486; Y. SATO et al.: "High Quality Ferroelectric Liquid Crystal Display with Quasi-Bookshelf Layer Structure"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 453 966 B1

## Beschreibung

Schalt- und Anzeigevorrichtungen, die ferroelektrische Flüssigkristall-Mischungen enthalten (FLC-Displays), sind beispielsweise aus EP-B 0 032 362 (= US-A 4 367 924) bekannt. Flüssigkristalldisplays sind Vorrichtungen, die z.B. aufgrund elektrischer Beschaltung ihre optischen Transmissionseigenschaften derart ändern, daß durchfallendes (und gegebenenfalls wieder reflektiertes) Licht intensitätsmoduliert wird. Beispiele sind die bekannten Uhren- und Taschenrechneranzeigen oder Flüssigkristalldisplays im OA- (office automation) oder TV-(television) Bereich (siehe auch Liquid Crystal Device Handbook, Nikkan Kogyo Shimbun, Tokyo, 1989; ISBN 4-526-02590-9C 3054 und darin zitierte Arbeiten).

Diese FLC-Displays sind so aufgebaut, daß eine Flüssigkristallschicht beiderseitig von Schichten eingeschlossen ist, die üblicherweise, in dieser Reihenfolge ausgehend von der FLC-Schicht, mindestens eine Orientierungsschicht, Elektroden und eine Begrenzungsscheibe (z.B. aus Glas) sind. Außerdem enthalten sie einen Polarisator, sofern sie im "guest-host"- oder im reflexiven Modus betrieben werden, oder zwei Polarisatoren, wenn als Modus die transmissive Doppelbrechung ("birefringence mode") genutzt wird. Die Schalt- und Anzeigeelemente können gegebenenfalls weitere Hilfsschichten, wie z.B. Diffusionssperr- oder Isolationsschichten enthalten.

Die Orientierungsschichten, die aus einem organischen (z. B. Polyimid, Polyamid und Polyvinylalkohol) oder anorganischen (z. B. SiO) Material bestehen, bringen, gemeinsam mit einem hinreichend klein gewählten Abstand der Begrenzungsscheiben, die FLC-Moleküle der Mischung in eine Konfiguration, bei der die Moleküle mit ihren Längsachsen parallel zueinander liegen und die smektischen Ebenen senkrecht oder schräg zur Orientierungsschicht angeordnet sind. In dieser Anordnung haben die Moleküle bekanntlich zwei gleichwertige Orientierungen, zwischen denen sie durch pulsartiges Anlegen eines elektrischen Feldes geschaltet werden können, d.h. FLC-Displays sind bistabil schaltbar. Die Schaltzeiten sind umgekehrt proportional zur spontanen Polarisation der FLC-Mischung und liegen im Bereich von µs.

Als Hauptvorteil der FLC-Displays gegenüber den in der industriellen Praxis bisher im wesentlichen noch anzutreffenden LC-Displays wird das erreichbare Multiplex-Verhältnis angesehen, d.h. die maximale Zahl der im zeitlichsequentiellen Verfahren ("Multiplex-Verfahren") ansteuerbaren Zeilen, das bei FLC-Displays im Gegensatz zu LC-Displays praktisch unbegrenzt ist. Diese elektrische Ansteuerung basiert im wesentlichen auf der vorstehend genannten und in SID 85 DIGEST p. 131 (1985) beispielhaft beschriebenen Pulsadressierung.

Bevorzugt wird in FLC-Displays wegen ihrer vergleichsweise geringen Viskosität und daher kurzen Schaltzeit die smektische C*-Phase des flüssigkristallinen Materials eingesetzt.

Besonders wichtige Funktionsgrößen eines FLC-Displays sind

a) die maximale Helligkeit (Transmission des Hellzustands),

b) der maximale Kontrast (Verhältnis von maximaler Hell- und maximaler Dunkeltransmission),

c) die Bildaufbaugeschwindigkeit (oder auch die Adressierungsgeschwindigkeit eines Bildpunkts).

Aufgabe der vorliegenden Erfindung ist es, ein ferroelektrisches Flüssigkeitsdisplay mit verbesserter Helligkeit, verbessertem Kontrast und verbesserter Schaltzeit bereitzustellen.

Zur Erläuterung dieser Aufgabenstellung werden im folgenden die Helligkeit (oder Helltransmission), der Kontrast und die Schaltzeit genauer beschrieben.

a) **Die maximale Helltransmission** T(hell) ist für FLC-Displays bekanntlich in guter Näherung durch die Gleichung (1) beschrieben:

$$T(\text{hell}) = \sin^2(\pi \Delta n d/\lambda) \cdot \sin^2(4\theta_{eff}) \qquad (1)$$

mit:

| | |
|---|---|
| $\Delta n$ = | Differenz der Brechzahlen (einachsige Näherung) |
| d = | Dicke der FLC-Schicht |
| $\lambda$ = | Vakuumwellenlänge |

$\theta_{eff}$ = effektiver Tiltwinkel

Im Idealfall ist T(hell) = 1 (oder 100 %).

Während der erste der beiden Ausdrücke in Gleichung (1) durch Abstimmung von $\Delta n$ und d auf die Wellenlänge des sichtbaren Lichtes verhältnismäßig leicht optimiert werden kann, bereitet die materialseitige Optimierung von $\sin^2 (4\theta_{eff})$ Schwierigkeiten, da $\theta_{eff}$ in der Regel sehr viel kleiner als 22,5° (der Optimalwert) ist.

In der sogenannten "Chevron"-Struktur (siehe z. B. T. Rieker et al., 1986, 11th Int. Liq. Cryst. Conf. (Berkeley, 1986)) besitzen die derzeitig verfügbaren Materialien bekanntlich nur Winkel bis zu etwa $\theta_{eff}$ = 8°, was zu einer Transmission von maximal T(hell) = 0,28 führt und somit einen Verlust von 72 % der Lichtleistung der FLC-Displaybeleuchtung entspricht.

Eine Ausnahme bezüglich des Tiltwinkels bilden FLC-Displays mit einer Orientierungsschicht aus schräg aufgedampftem Siliziummonooxid (SiO), das jedoch in einem sehr teuren Prozeß aufgebracht werden muß.

Wie später gezeigt wird, haben die erfindungsgemäßen FLC-Displays weit höhere effektive Tiltwinkel in der "Chevron"-Textur, ermöglichen somit sehr viel höhere Helltransmissionen und erfordern bei ihrer Herstellung keinen wirtschaftlich ungünstigen Aufdampfprozeß.

Eine weitere Möglichkeit hohe Helltransmissionen zu erhalten, stellt die Verwendung der sogenannten "bookshelf"- oder "quasi-bookshelf"-Geometrie dar, bei der die smektischen Lagen senkrecht oder nahezu senkrecht zu den Glasplatten verlaufen (siehe z.B. H.R. Dübal et al., Proc. 6th Intl. Symp. on Electrets, Oxford, England 1988; Y. Sato et al., Jap. J. Appl. Phys. Bd. 28, 483 (1989)).

b) der Kontrast ist das Verhältnis der Transmissionen im hellen und dunklen Schaltzustand. Derzeit werden für FLC-Displays maximale Kontrastwerte von 5 bis 10 angegeben. Der Grund dieser für viele Anwendungen (z.B. TV) zu kleinen Werte liegt sowohl in einer zu geringen Helltransmission als auch in einer zu hohen Resttransmission im dunklen Schaltzustand. Zwischen gekreuzten Polarisatoren ist die Resttransmission durch eine bläulich erscheinende Flüssigkristalltextur leicht erkennbar. Man findet sie für alle bisher bekannten FLC-Materialien, sofern organische Orientierungsschichten, wie z. B. aus geriebenem Polyimid und Polyamid, verwendet werden.

Wiederum bildet das in einem teuren Vakuumprozeß aufgebrachte, schräg aufgedampfte SiO eine Ausnahme, da hier Zustände mit wesentlich geringerer Dunkeltransmission und viel höheren Kontrastwerten erhalten werden, wobei in der Fachwelt schon Werte von 100 angegeben wurden.

Wie nachfolgend gezeigt wird, besitzen die erfindungsgemäßen FLC-Displays selbst auf der Basis von konventionellen, kostengünstig herstellbaren Orientierungsschichten, z.B. aus Polyimid, Polyamid oder Polyvinylalkohol hohe Kontrastwerte, die selbst für TV-Anwendungen eine ausreichende Größenordnung aufweisen.

c) Die Bildaufbaugeschwindigkeit oder die Bildwechselfrequenz ist durch die Anzahl der Zeilen eines FLC-Displays und die Zeitdauer der elektrischen Schaltpulse gegeben. Je kürzer die Schaltpulsbreite ist, desto schneller ist der Bildaufbau. Andererseits ist die Schaltzeit materialseitig von der spontanen Polarisation (P) und der Viskosität ($\gamma$) des FLC-Materials abhängig.

Da sich die Werte der Rotationsviskosität ($\gamma$) nicht genügend stark reduzieren lassen, ist die Erhöhung von (P) ein geeignetes Mittel zur Verkürzung der Schaltzeit. Dies scheitert derzeit jedoch an - wahrscheinlich durch ionische Verunreinigungen verursachten - Rückschalteffekten, die in der einschlägigen Literatur unter der Bezeichnung "surface memory effect", "reverse switching", "ghost picture" und dergleichen beschrieben werden (vgl. z. B. J. Dijon et al., SID conference, San Diego 1988, Seiten 2 - 249).

Die ionischen Verunreinigungen bewirken, daß man ein Bild mehrmals einschreiben muß, damit das vorher eingeschriebene Bild völlig verschwindet ("Geisterbild") Dieser, dem wirtschaftlichen Potential der FLC-Displays stark entgegenstehende Effekt ist jedoch umso stärker ausgeprägt, je höher die spontane Polarisation des FLC-Materials ist.

In DE-A-3 939 697 wurden bereits FLC-Mischungen vorgestellt, die zur Vermeidung bzw. Reduzierung des "Geisterbild-Effektes" in Displays als eine Komponente einen Komplexliganden für Ionen enthalten.

In der EP-A-0 362 861 ist eine Orientierungsschicht für u.a. ferroelektrische Flüssigkristalle beschrieben, die als eine Komponente ein lineares, amphiphiles Polyamid enthält. Über verbesserte Konstrast- und Helligkeitswerte wird nichts berichtet.

Es wurde nun überraschend gefunden, daß bestimmte cyclische Verbindungen, die die Orientierungsschicht amphiphil machen, zu einem stark verbesserten Kontrast und einer hohen Helligkeit im FLC-Schalt- und Anzeigeelement führen.

Die vorliegende Erfindung betrifft somit ein Flüssigkristalldisplay enthaltend transparente Trägerplatten, Elektroden, mindestens einen Polarisator, ein ferroelektrisches flüssigkristallines Medium sowie mindestens eine Orientierungsschicht, die innerhalb der Schicht oder an der Oberfläche eine Komponente enthält, die die Orientierungsschicht

amphiphilisiert, dadurch gekennzeichnet, daß die amphiphilisierende Komponente ein Coronand, ein Kryptand oder eine makrocyclische Verbindung der Formel (VI) ist,

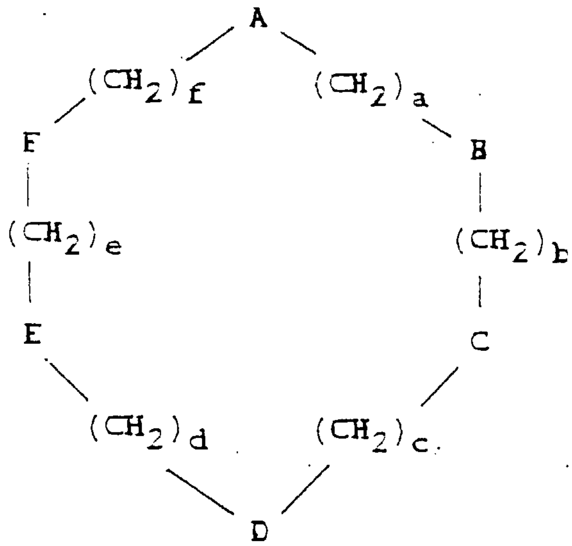

VI

wobei

| | |
|---|---|
| a, b, c, d, e, f | unabhängig voneinander eine ganze Zahl von Null bis 4, wobei a + b + c + d + e + f ≥ 7 ist, und |
| -A-, -B-, -C-, -D-, -E-, -F- | gleich oder verschieden $-CH_2-$, -CHR'-, -CH=CH-, -CR=CR'-, -C≡C-, |

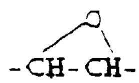 ,

-CO-, -COO-,

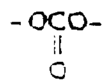 ,

-CONH-, -CONR'-, -NR'-,

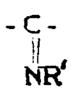 , 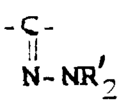 , 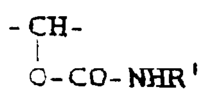 , 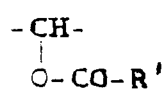 , 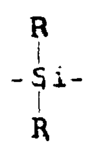 ,

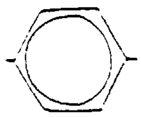 , 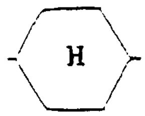 , 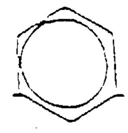 , 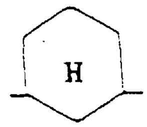 , 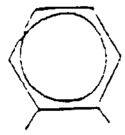 , 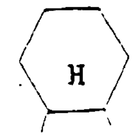

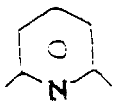 , 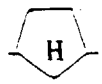 , 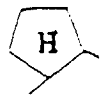 , 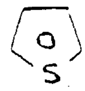 , 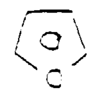 , .

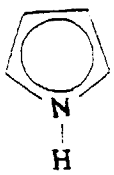 oder 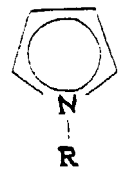

wobei

- R gleich Alkyl mit 1 bis 12 C-Atomen und
- R' gleich Alkyl mit 1 bis 12 C-Atomen, wobei eine $-CH_2$-Gruppe durch -O-, -COO- oder -OCO- ersetzt sein kann, Phenyl oder Cl, F oder CN bedeuten kann.

Ebenso Gegenstand der Erfindung ist ein Verfahren zur Verbesserung des Kontrasts in einem FLC-Display, welches neben Trägerplatten, Elektroden, mindestens einem Polarisator und einem FLC-Medium, mindestens eine Orientierungsschicht enthält, welches dadurch gekennzeichnet ist, daß eine amphiphilisierende Verbindung aus der Gruppe Kryptanden, Coronanden und den obengenannten makrocyclischen Verbindungen der Formel (VI) durch Physisorption oder chemische Ankopplung auf die Orientierungsschicht auf- oder in die Orientierungsschicht eingebracht wird, indem sie als zusätzliche Schicht zwischen Orientierungsschicht und FLC-Schicht aufgebracht wird, durch chemische Reaktion an das Material der Orientierungsschicht angekoppelt wird oder als Mischungskomponente dem Material der Orientierungsschicht zugesetzt wird.

Eine Substanz ist per Definitionen amphiphil, wenn sie sowohl über hydrophile als auch lipophile Eigenschaften verfügt. Im Extremfall liegen dann Verbindungen mit Tensid-Charakter vor.

Aber auch Verbindungen vom Typ der Coronanden und Kryptanden haben hydrophile (Endo-Sphäre der Sauerstoff-Donorzentren) als auch lipophile (Exo-Sphäre der C-H-Einheiten) Eigenschaften.

Auch Orientierungsschichten können amphiphil gemacht werden, wobei sich hydrophile Eigenschaften und lipophile Eigenschaften durchaus in diskreter Lokalisation befinden können.

So kann z.B. ein polares PVA durch Belegung mit lipophilen Verbindungen oder durch Anknüpfung (per Kovalenzbindung) lipophiler Strukturen mit partiell hydrophilen und partiell lipophilem Verhalten versehen und somit amphiphilisiert werden.

Eine analoge Vorgehensweise bietet sich bei lipophilen Orientierungsschichten und hydrophilen Zusatzstoffen an. Eine ursprünglich hydrophile oder lipophile Orientierungsschicht kann auch dadurch amphiphilisiert werden, daß sie mit einer amphiphilen Verbindung belegt oder eine amphiphile Verbindung chemisch an die Orientierungsschicht gebunden wird.

Eine amphiphilisierte Orientierungsschicht führt zu einem deutlich erhöhten Kontrast im FLC-Display und zu einer größeren Helligkeit des Bildes.

Die erfindungsgemäßen FLC-Displays sind dadurch gekennzeichnet, daß eine geeignete - unten näher beschriebene - Substanz oder ein Substanzgemisch auf die Orientierungsschicht aufgetragen wird und als dünne Zwischenschicht zwischen der Orientierungsschicht und der ferroelektrischen Flüssigkristallschicht das Orientierungs- und/oder das Schalt-Verhalten derart beeinflußt, daß sich die angestrebten hohen Kontrast- und Helligkeitswerte erzielen lassen, ohne jedoch den kostspieligen Weg der SiO-Schrägbedampfung wählen zu müssen.

Die auf diese Art wirksamen Substanzen können sowohl chemisch an die Orientierungsschicht gebunden sein als auch lediglich als stark oder schwach physisorbierte Schicht aufgetragen werden.

Die die Amphiphilie der Orientierungsschicht bewirkende Komponente im Display kann somit als zusätzliche Schicht zwischen Orientierungsschicht und FLC-Schicht aufgebracht sein, sie kann jedoch auch als eine einfache Mischungskomponente dem Material der Orientierungsschicht zugesetzt werden. Eine weitere Möglichkeit besteht darin, daß die Substanz durch chemische Reaktion an das Material der Orientierungsschicht angekoppelt wird.

Die wirksame Zwischenschicht kann beispielsweise aus einer Lösung der geeigneten Verbindungen in Aceton, Toluol, Cyclohexanon, Isopropanol, N-Methylpyrrolidon o.ä. durch Druck-, Tauch-, Sprüh-, Schleuderverfahren und dergleichen aufgebracht werden. Geeignet sind ferner Verfahren der Vakuumdeposition, wie einfaches Aufdampfen oder auch reaktive Aufdampfverfahren (wie z.B. "chemical vapor deposition (CVD)").

Die wirksame Zwischenschicht kann dabei an mehreren Positionen im FLC-Display-Produktionsprozeß aufgebracht werden, z.B. direkt nach dem Härten bzw. Trocknen der Orientierungsschicht, vor dem Reibeschritt oder unmittelbar vor dem Verkleben der Zelle. Die Substanzen oder Substanzgemische können ebenfalls auf den Naßfilm der Orientierungsschicht aufgetragen werden und mit der Orientierungsschicht gleichzeitig gehärtet, d.h. erhitzt werden.

Vorteilhaft ist es auch, die wirksamen Substanzen oder Substanzgemische in die zur Erzeugung der Orientierungsschicht erstellte Polymer- oder Polymervorstufenlösung einzumischen und dann gemeinsam mit letzterer in einem Schritt aufzutragen.

Die wirksamen Verbindungen können prinzipiell sowohl monomere, oligomere oder auch polymere Verbindungen sein. Sie haben im allgemeinen einen mittel bis stark lipophilen Charakter mit geringer Polarität, oder zeichnen sich dadurch aus, daß die Verbindung getrennt lokalisierte Bereiche höherer und niedriger Polarität/Hydrophilie besitzt. Cyclische Verbindungen können auch eine Exo-Sphäre mit eher lipophilen und eine Endo-Sphäre mit eher hydrophiler Natur aufweisen.

Welcher Typ von Verbindung geeignet ist, um im FLC-Display die Orientierungsschicht zu amphiphilisieren, ist u. a. vom eingesetzten FLC-Medium und der Orientierungsschicht abhängig.

Als Orientierungsschichten können alle herkömmlich verwendbaren Materialien eingesetzt werden, wie z. B. Polyetherketone, Polyamide, Polyimide und Polyvinylalkohole, insbesondere solche mit freien funktionellen Gruppen, wie z.B. OH-, Ester, Amino- oder Carboxylgruppe sowie auch Siloxane, Oligomere oder Polymere mit SiO- oder Si-Einheiten und elektrisch leitfähige Polymere.

Als Polyetherketone können insbesondere die in der deutschen Patentanmeldung P 40 02 082 vorgeschlagenen Substanzen verwendet werden:

Sie bestehen aus mindestens einer Struktureinheit der Formel I

$$-O-A-O-B- \qquad (I)$$

wobei A ausgewählt ist aus den Resten

$A^1$ 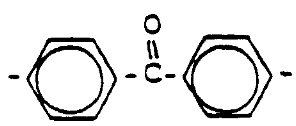

$A^2$ 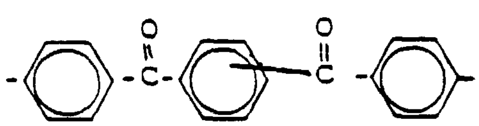 (m oder p)

$A^3$ 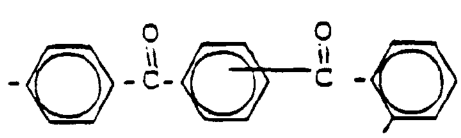 (m oder p)

und B ausgewählt ist aus den Resten

$B^1$ 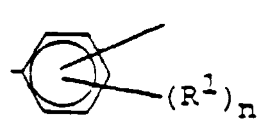

$B^2$ 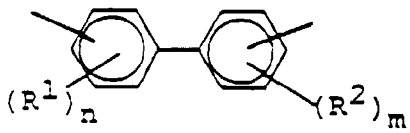

$B^3$ 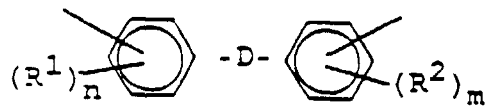

$B^4$ 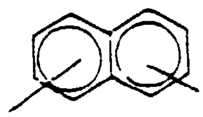

$B^5$ 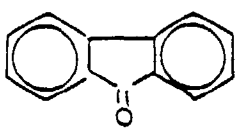 $B^6$ 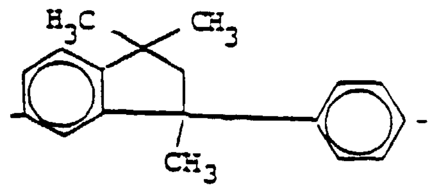

$B^7$ 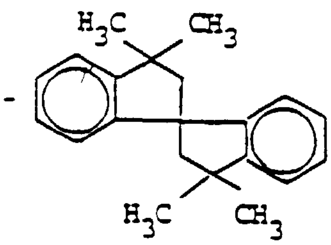 $B^8$ 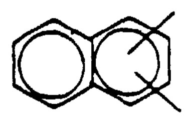

mit $R^1$ und $R^2$, die gleich oder verschieden sind und Wasserstoff, Halogen, vorzugsweise Brom, $(C_1$-$C_8)$-Alkyl oder -Alkoxy, vorzugsweise $(C_1$-$C_4)$-Alkyl oder -Alkoxy, darstellen oder Aryl oder Aryloxy mit 6 bis 12 C-Atomen im Arylrest bedeuten, m und n sind gleich oder verschieden und bedeuten Null oder als ganze Zahl 1, 2, 3 oder 4, vorzugsweise Null, 1 oder 2, insbesondere Null oder 2. Stellen $R^1$ und $R^2$ in den Resten $B^2$ und $B^3$ Halogen dar, sind m und n vorzugsweise 2. D ist ausgewählt aus den zweiwertigen Resten

$D^1$ -O-, $D^2$ $>C = O$, $D^3$ $-CH_2-$,
$D^4$ $-C(CH_3)_2-$, $D^5$ $-C(CF_3)_2-$,
$D^6$

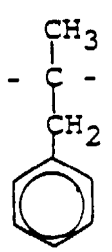 , $D^7$ 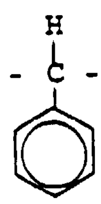 , $D^8$ 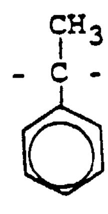

$D^9$

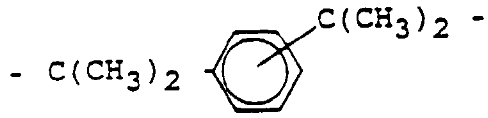

(m oder p)

$D^{10}$

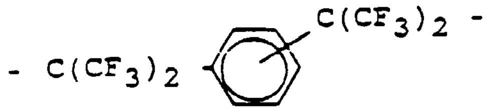

(m oder p),

wobei das molare Verhältnis der Einheiten A und B 0,9 bis 1,1 zu 1,0, vorzugsweise 1:1, beträgt.

Die aufgeführten Polymere können Homopolykondensate sein, die also nur je eine Einheit vom Typ A und eine Einheit vom Typ B je wiederkehrender Einheit enthalten, oder Copolykondensate, welche zwei oder mehrere verschiedene Einheiten vom Typ A und/oder zwei oder mehrere verschiedene Einheiten vom Typ B enthalten.

Als Polyamide können insbesondere die in den deutschen Patentanmeldungen P 38 33 180 und P 39 38 209 gezeigten Substanzen verwendet werden: Die Verbindung besteht aus Struktureinheiten der Formel II

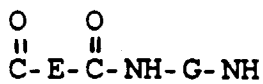

(II)

wobei die Einheiten E und G folgende Bedeutung haben:

E = 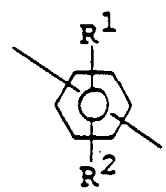

mit $R^1$, $R^2$, die gleich oder verschieden sein können und für H, $(C_1\text{-}C_6)$-Alkyl, vorzugsweise $(C_4\text{-}C_6)$-Alkyl, $(C_1\text{-}C_6)$-Alkoxy, vorzugsweise $(C_4\text{-}C_6)$-Alkoxy, stehen mit der Maßgabe, daß mindestens einer der Reste $R^1$ oder $R^2$ ein tertiär substituiertes C-Atom, vorzugsweise die Gruppe $-C(CH_3)_3$, enthält, oder

= 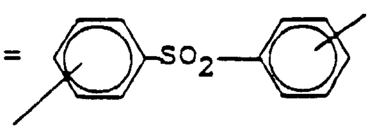 oder 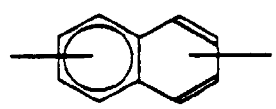

oder

= 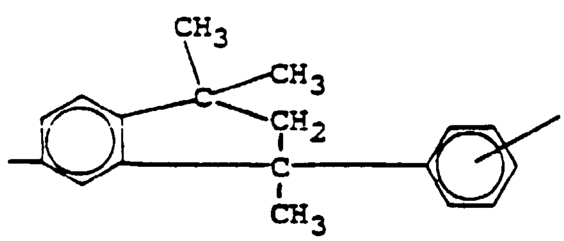 ,

und

G = 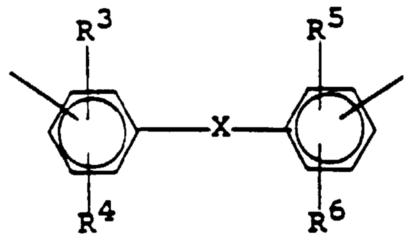

mit $R^3$, $R^4$, $R^5$, $R^6$, die gleich oder verschieden sein und für $-CH_3$, $-CF_3$, $-OCH_3$, -F, -Cl, -Br oder -H stehen können, sowie X, das für -O-, $-C(CH_3)_2-$, $-C(CF_3)_2-$, $-SO_2-$, -CO-, $-CH_2-$ oder den Rest

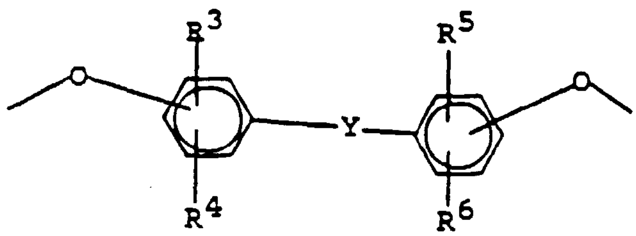

mit $R^3$ bis $R^6$ wie oben definiert und Y = $-C(CH_3)_2-$, $-C(CF_3)_2-$, $-SO_2-$, -CO-, $-CH_2-$, -O- stehen kann, oder

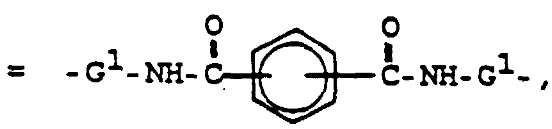

wobei $G^1$ für die vorstehend genannten Bedeutungen von G stehen kann.

Die erfindungsgemäßen Polymerisate mit Struktureinheiten der Formel II können entweder Homokondensate sein, welche nur gleiche Struktureinheiten der Formel II enthalten, oder Cokondensate aus verschiedenen Struktureinheiten der Formel II. Bevorzugt sind Copolyamide, die verschiedene Struktureinheiten der Formel II in vorzugsweise statistischer Verteilung enthalten.

Es können ferner Polymerisate eingesetzt werden aus Cokondensaten mit mindestens 10 Mol-%, bezogen auf das Polymerisat, Struktureinheiten der Formel II, die gleich oder verschieden sein können, und Struktureinheiten der Formel III,

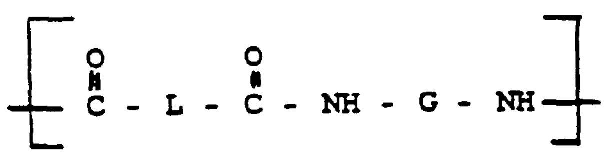 III

worin L für

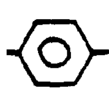 oder 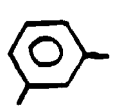 oder 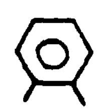

steht und G die Bedeutung wie in Formel II hat.

Das Molverhältnis der Struktureinheiten der Formeln II:III in den Copolyamiden, bei vorzugsweise statistischer

Verteilung der Struktureinheiten, liegt vorzugsweise im Bereich von 1:9 bis 9,5:0,5, insbesondere 1:9 bis 1:8.

Als Maß für das Molekulargewicht der Polymerisate kann die Grenzviskosität [η], die nach bekannten Meßmethoden an Lösungen der Polymerisate ermittelt werden kann, herangezogen werden. Die Grenzviskosität [η] der erfindungsgemäßen Polyamide bzw. Copolyamide kann in einem großen Bereich variiert werden. Sie beträgt vorzugsweise 0,2 bis 5 dl/g, insbesondere 0,4 bis 4,2 dl/g, gemessen in N-Methylpyrrolidon (NMP)-Lösung bei 25°C.

Ferner können aromatische Polyamide als Orientierungsschicht eingesetzt werden mit Struktureinheiten der Formel IV,

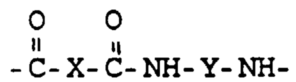

(IV)

wobei die Symbole folgende Bedeutung haben:

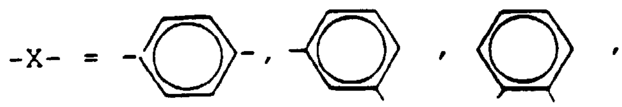

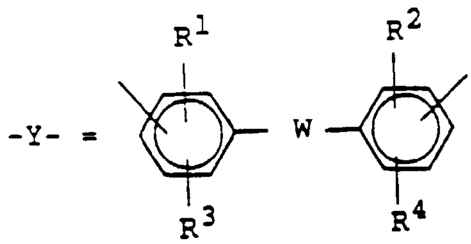

wobei $R^1$ und $R^2$ gleich oder verschieden sind und für perfluoriertes Alkyl mit 1 bis 4 C-Atomen stehen, $R^3$ und $R^4$ gleich oder verschieden sind und für H oder $CF_3$ stehen und wobei -W- für -O-, $-C(CH_3)_2-$, $-C(CF_3)_2-$, $-SO_2-$, -CO-, $-CH_2-$, eine Einfachbindung oder den Rest

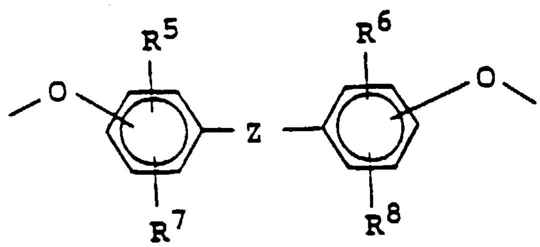

steht, wobei $R^5$, $R^6$, $R^7$ und $R^8$ gleich oder verschieden sind und $CH_3$, $CF_3$, $OCH_3$, F, Cl, Br oder H bedeuten, und -Z- für $-C(CH_3)_2-$, $-C(CF_3)_2-$, $-SO_2-$, -CO-, $-CH_2-$ oder -O- steht.

Die Gruppe -X- kann darüber hinaus auch eine Vielzahl anderer bivalenter Gruppen bedeuten, da als Dicarbonsäure-Komponente auch beispielsweise 1,4-Cyclohexan-dicarbonsäure oder Pyridin-dicarbonsäuren eingesetzt werden können

Als Polyimide werden insbesondere fluorierte Polyimide sowie solche mit freien funktionellen Gruppen, wie z. B. OH-, Ester-, Amino-, Carboxylgruppen eingesetzt.

Als elektrisch leitfähige Polymere werden bevorzugt Verbindungen gemäß EP-A 412 408 mit wiederkehrenden Struktureinheiten der Formel V eingesetzt.

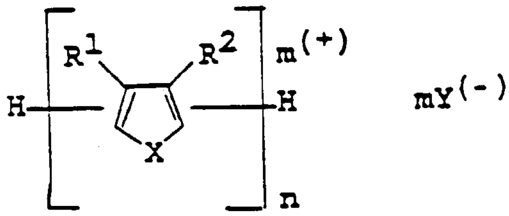

V

wobei

- $R^1$, $R^2$ unabhängig voneinander H oder geradkettiges oder verzweigtes Alkyl oder Alkoxy mit 1-16 C-Atomen oder Halogen,
- X S oder NH
- $Y^-$ $BF_4^-$, $PF_6^-$, $PO_4^{3-}$, $AsF_6^-$, $SbCl_6^-$, $SO_4^{2-}$, $HSO_4^-$, Alkyl-$SO_3^-$, Perfluoralkyl-$SO_3^-$, Aryl-$SO_3^-$, $F^-$ oder $Cl^-$,
- n eine ganze Zahl von 4 bis 100 und
- m eine ganze Zahl von 1 bis 30 bedeuten.

Bevorzugt wird eine Orientierungsschicht eingesetzt, die ein Polyimid, Polyamid oder einen Polyvinylalkohol (PVA) als Grundkomponente enthält. Hierbei enthält die Orientierungsschicht vorzugsweise 50 bis 99,99 Gew.-% des Polyimids, Polyamids bzw. PVAs und insgesamt 0,01 bis 50 Gew.-% einer oder mehrerer der wirksamen Verbindungen.

Die für Orientierungsschichten allgemein geeigneten Materialien, wie Polyamide, Polyimide bzw. PVA, werden beispielsweise von Birendra Bahadur in Mol. Cryst. Liq. Cryst. 109, I (1984) beschrieben.

In einer bevorzugten Ausführungsform werden zur Vermeidung von Kurzschlüssen Isolationsschichten verwendet, wobei die Schichtabfolge

(1) Glas,
(2) ITO-Elektrode,
(3) Isolationsschicht,
(4) Orientierungsschicht mit Zusatzstoff eingemischt oder an der Oberfläche chemisch oder physikalisch angebunden,

auftritt. Zur Unterdrückung des zuvor beschriebenen "surface memory effects" sollte die elektrische Kapazität der Isolations- und Orientierungsschicht möglichst hoch sein. (vgl. hierzu C. Escher, H.-R. Dübal, T. Harada, G. Illian, M. Murakami und D. Ohlendorf, 2nd Int, Symp. on FLC, Göteborg 1989, wird in Ferroelectrics veröffentlicht).

Für eine genügende Isolationsfähigkeit sollte die Dicke der Isolationsschicht mindestens 50 - 100 nm betragen. Um bei dieser Schichtdicke noch genügend hohe Kapazitäten zu erreichen, müssen Isolationsschichten mit hoher Dielektrizitätskonstante, wie z.B. $Ta_2O_5$, $TiO_2$ etc., verwendet werden (siehe auch J 61170726A, J 61078235A, Y. Inabe, K. Katagiri, H. Inone, J. Kanbe, S. Yoshihara und S. Iijima,Ferroelectrics (1988), 85, S. 255-264).

Als Verbindungen, die die Orientierungsschicht amphiphilisieren, sind insbesondere geeignet macrocyclische Verbindungen, Kryptanden, Coronanden.

Erfindungsgemäß einzusetzende makrocyclische Verbindungen sind in der vor kurzem eingereichten, nicht vorveröffentlichten deutschen Patentanmeldung "Verwendung von macrocyclischen Verbindungen als Komponente für ferroelektrische Flüssigkristallmischungen (P 4 011 804.5) beschrieben und werden hier durch die allgemeine Formel VI wiedergegeben.

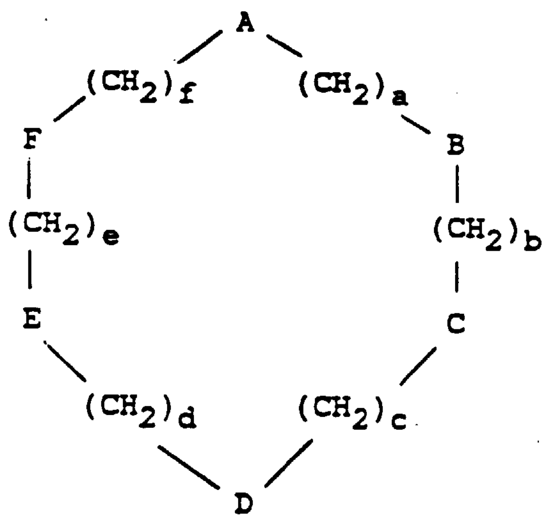

V I

wobei

| | |
|---|---|
| a, b, c, d, e, f | unabhängig voneinander eine ganze Zahl von Null bis 4, wobei a + b + c + d + e + f ≥ 7 ist, und |
| -A-, -B-, -C-, -D-, -E-, -F- | gleich oder verschieden $-CH_2-$, -CHR'-, -CH=CH-, -CR=CR'-, -C≡C-, 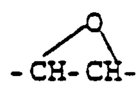 , -CO-, -COO-, 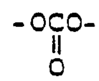 , -CONH-, -CONR'-, -NR'-, |

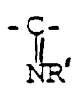 , 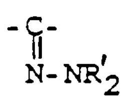 , 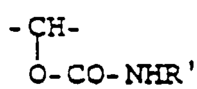 , 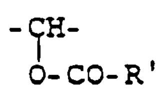 , 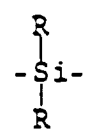 ,

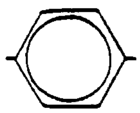 , 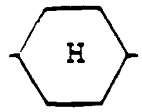 , 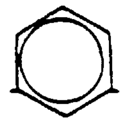 , 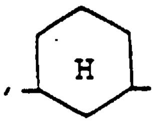 , 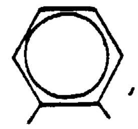 , 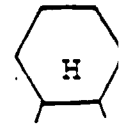

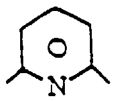 , 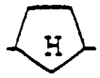 , 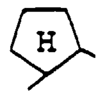 , 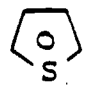 , 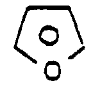 , .

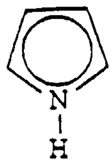 oder 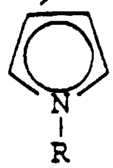

wobei

R gleich Alkyl mit 1 bis 12 C-Atomen und

R' gleich Alkyl mit 1 bis 12 C-Atomen, wobei eine $-CH_2$-Gruppe durch -O-, -COO- oder -OCO- ersetzt sein kann, Phenyl oder Cl, F oder CN bedeuten kann.

Kryptanden und Coronanden, wie in der vor kurzem eingereichten deutschen Patentanmeldung "Kryptanden bzw. Coronanden enthaltende ferroelektrische Flüssigkristallmischung" P 4 011 803.7 genannt, sind ebenfalls besonders als amphiphilisierende Verbindungen geeignet.

Zur Klassifizierung der genannten Komplexliganden sei auf E. Weber und F. Vögtle, Inorganica ChimicaActa, Bd. 45, (1989) L65-L67 verwiesen. Die dort aufgeführten Ligandtopologien sind im folgenden wiedergegeben:

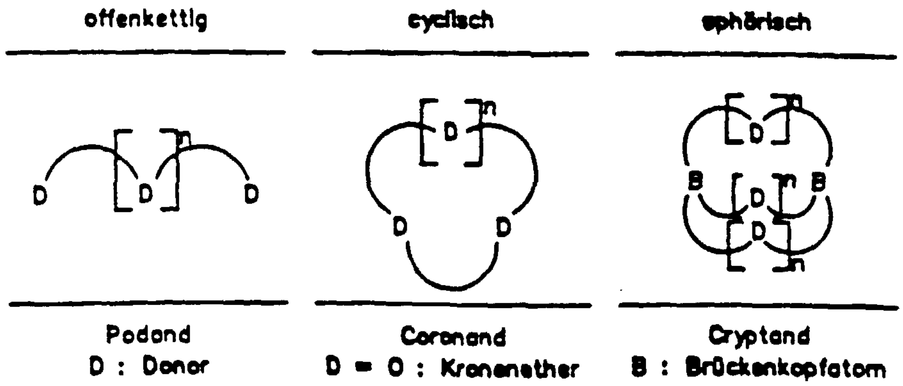


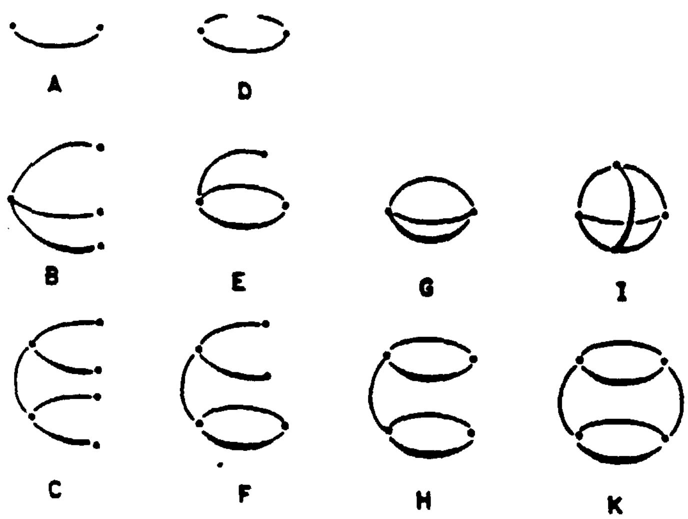


A–C: acyclic (podands); D–F: monocyclic (coronands); G–H: bicyclic (coronands, cryptands); I–K: tricyclic (cryptands).

Einzusetzende Kryptanden oder Coronanden können mit der allgemeinen Formel VIIoder VIIIdargestellt werden.

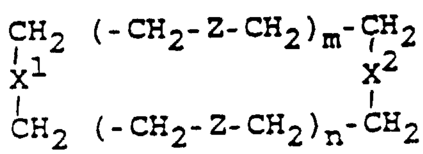

VII

wobei

-Z- -O- oder -S-
m, n ganze Zahlen größer Null bedeuten und
m+n = 2 bis 6 ist,
$-X^1-$, $-X^2-$ gleich oder verschieden

-Z-, -NR-,

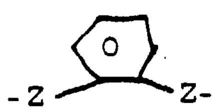, 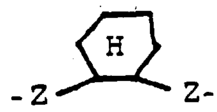

oder

-$X^1$-, -$X^2$- zusammen

$>N-CH_2(-CH_2-Z-CH_2)_1-CH_2-N<$

oder

$>N-CO(-CH_2-Z-CH_2)_1-CO-N<$

sind,

wobei

-R Alkyl oder Alkanoyl mit 1 bis 15 C-Atomen, -Phenyl, -Benzyl oder -Benzoyl und

l 1 oder 2 bedeuten;

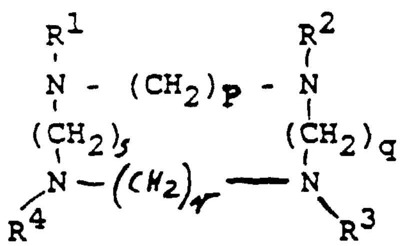

VIII

wobei -$R^1$, -$R^2$, -$R^3$ und -$R^4$ unabhängig voneinander

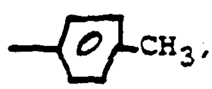

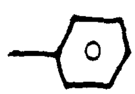,

-H, -$CH_3$,

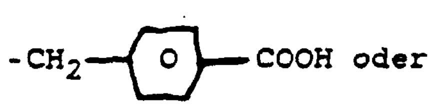 oder 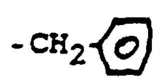

bedeuten und p, q, r, s unabhängig voneinander eine ganze Zahl von 2 bis 4, wobei p+q+r+s = 8 bis 16, ist.

Bevorzugte Coronanden sind:

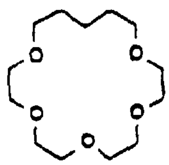
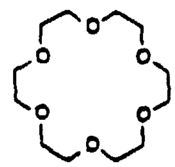
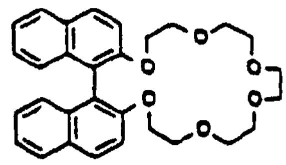

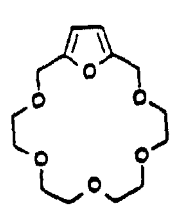
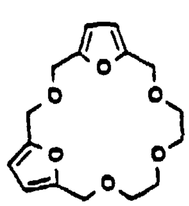
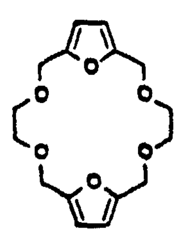
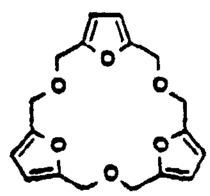

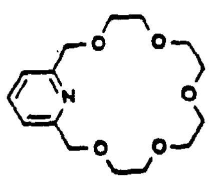
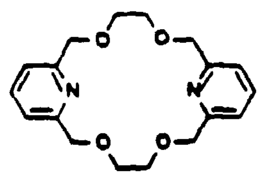
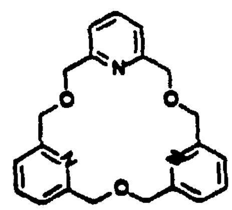

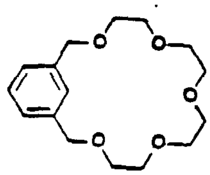
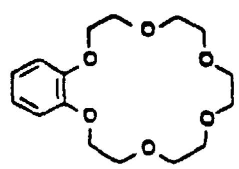
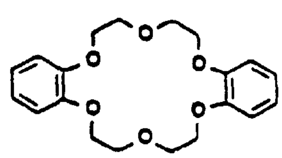

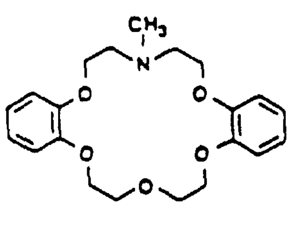
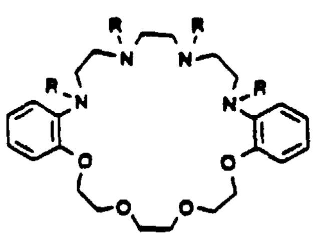
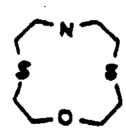
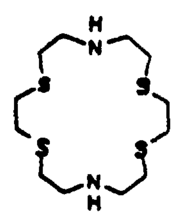

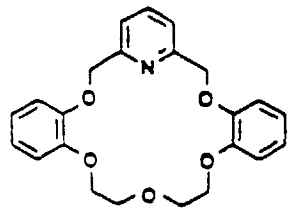
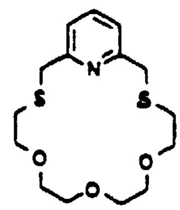
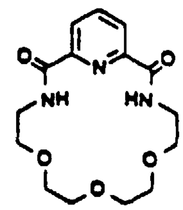

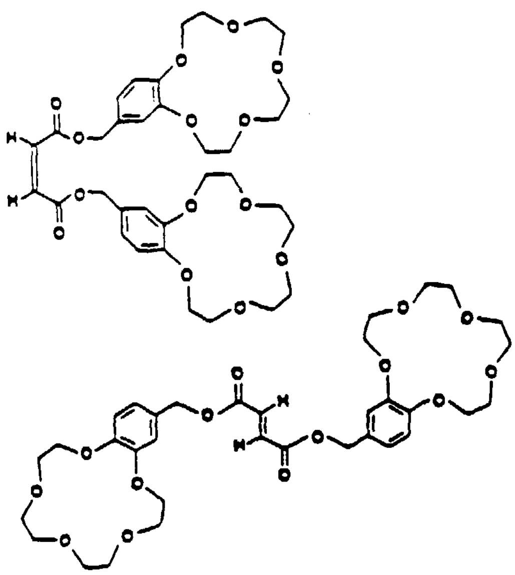
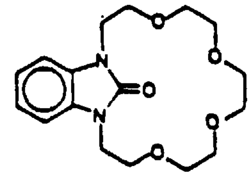
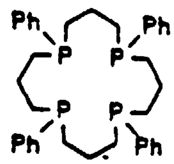
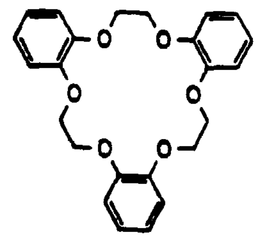

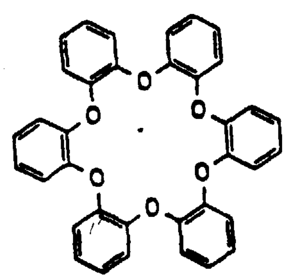
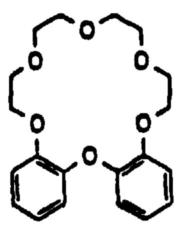

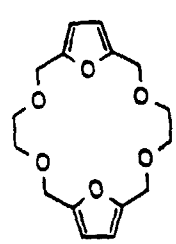
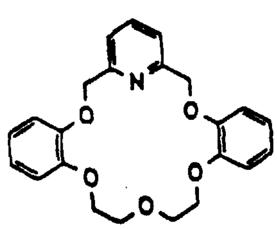
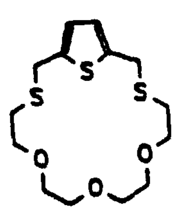

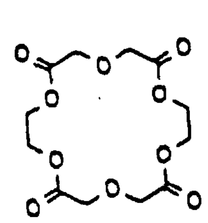

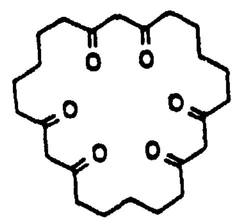

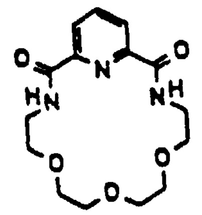

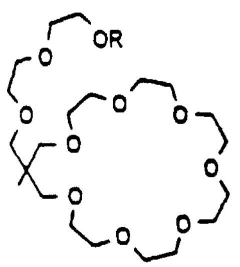

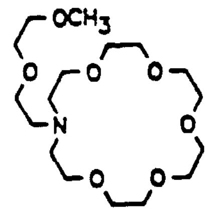

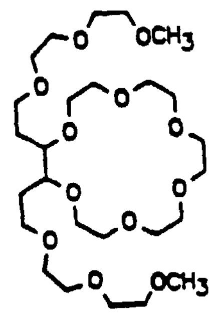

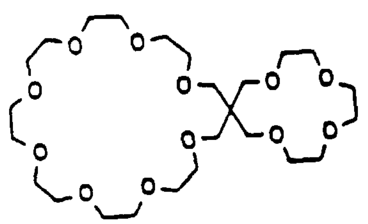

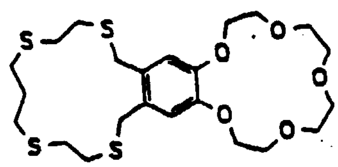

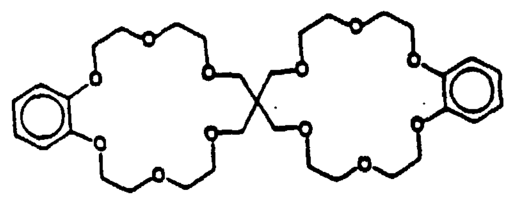

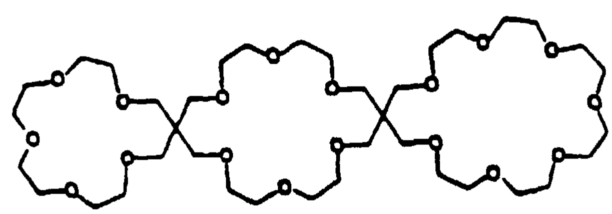

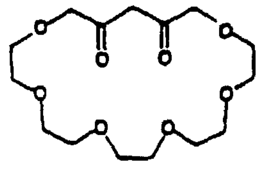

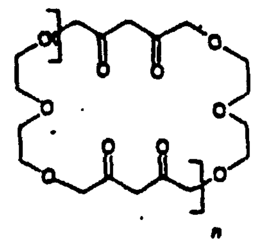

n = 1
n = 2

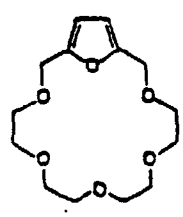

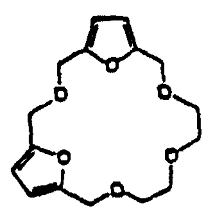

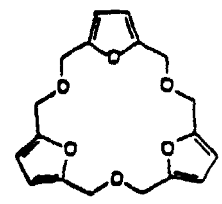

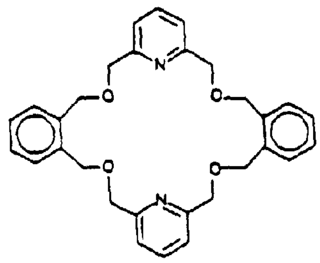

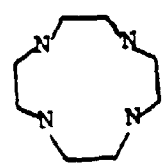

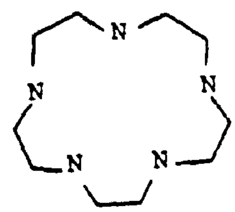

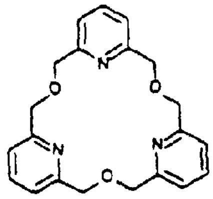

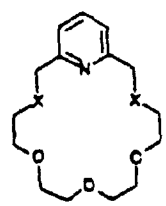

X = O
X = S

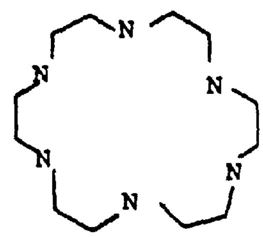

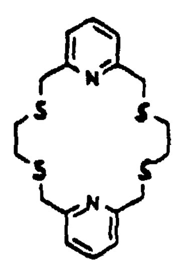

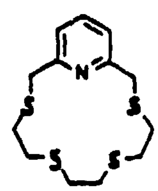

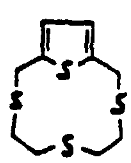

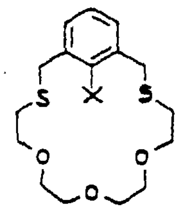

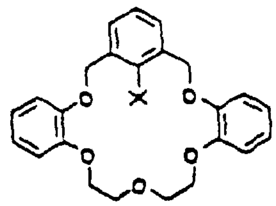

X= H, $OCH_3$, $SCH_3$, $NO_2$, CN, $C_6H_5$, $COOCH_3$, F, Cl

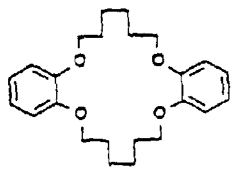

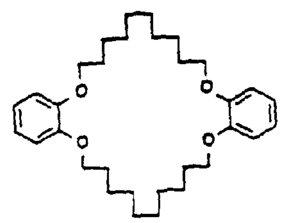

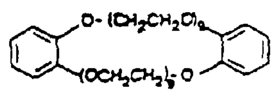

30

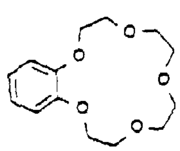

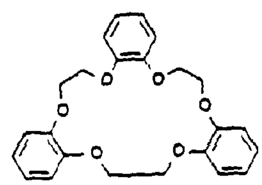

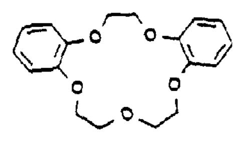

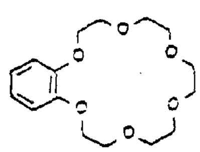

22

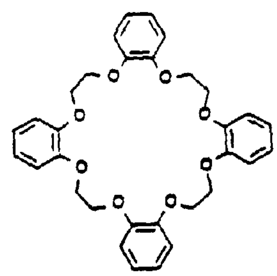

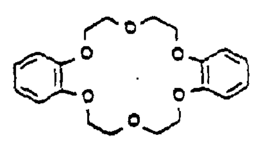

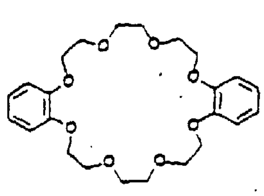

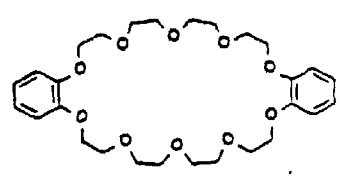

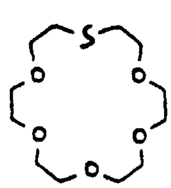

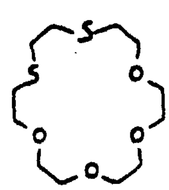

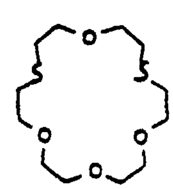

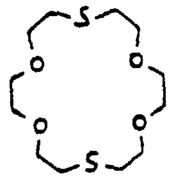
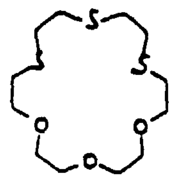
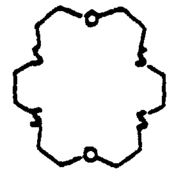
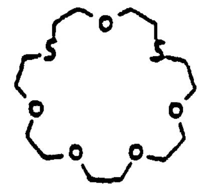

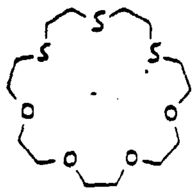
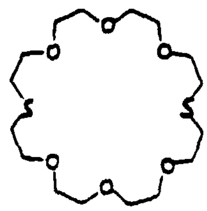
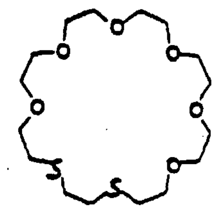

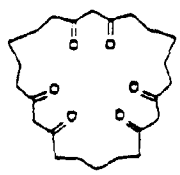
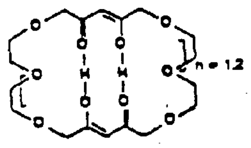
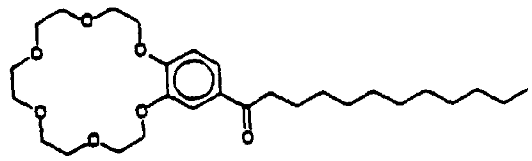

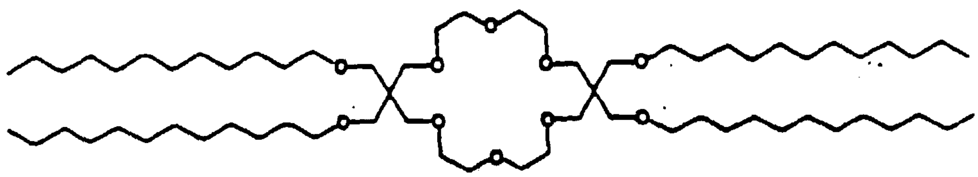

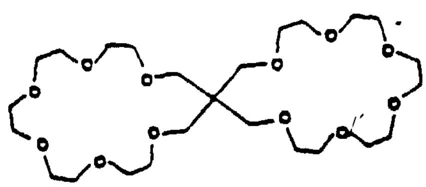
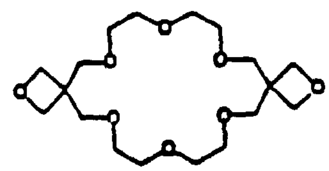

Bevorzugte Kryptanden sind:

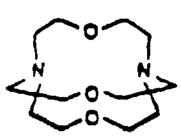
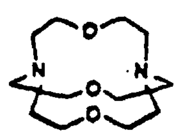
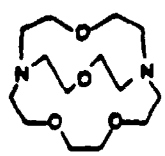
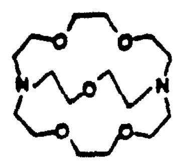

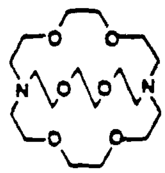

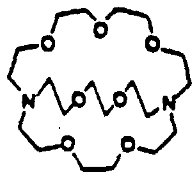

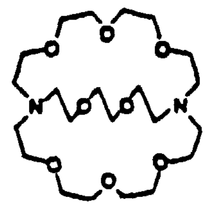

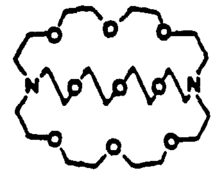

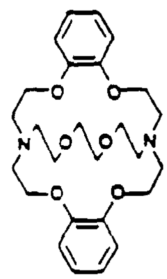

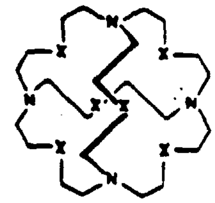

X = O

X = $(CH_2)_n$

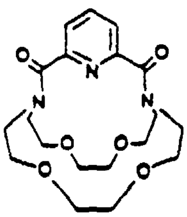

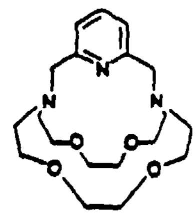

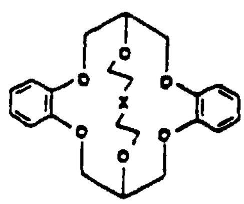

X = $OCH_2CH_2O$

X = $(OCH_2CH_2)_2O$

X = 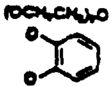

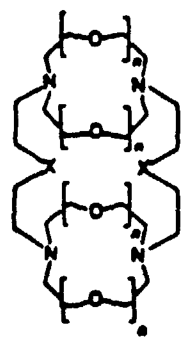

X = O; $n$ = 1

X = O; $n$ = 2

X = NH; $n$ = 2

X = $CH_2$; $n$ = 2

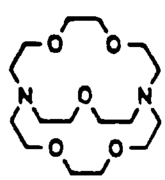

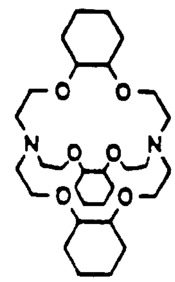
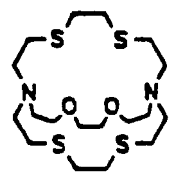
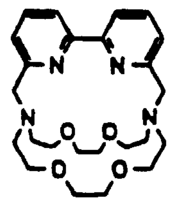

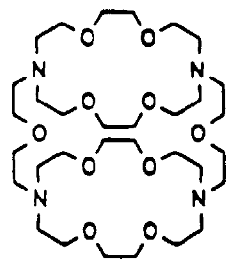
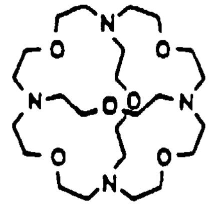

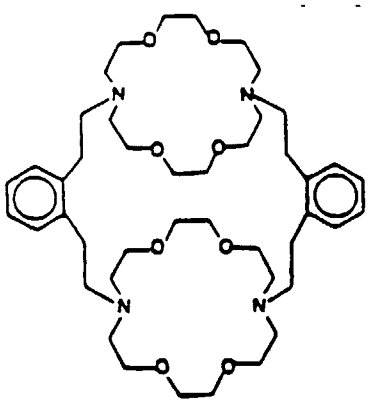
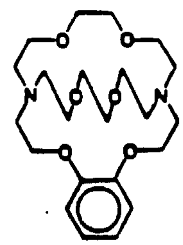
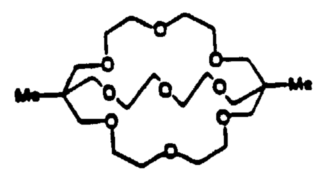

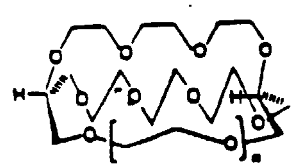

n = 2
n = 3

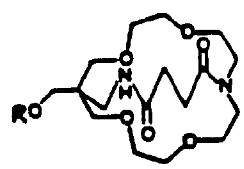

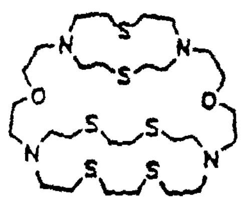
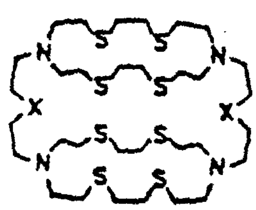

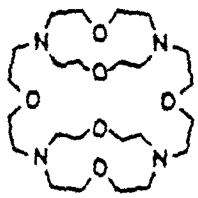

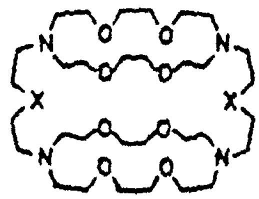

X=O
X=CH2
X=o-Phenylen
X=NH

Ganz allgemein gibt es für die genannten Verbindungen folgende Arten der Ankopplung an die bzw. in der Orientierungsschicht

I Chemische Ankopplung - d.h. die amphiphilisierende Verbindung wird bevorzugt über Kovalenz-Bindungen - an/in der Orientierungsschicht gebunden. Die anzubindende Verbindung hat die allgemeine Formel

$$C_y - G - R_g.$$

Dabei bedeuten:

$C_y$ eine der vorgenannten amphiphilisierenden Verbindungen;
G eine geradkettige oder verzweigte Alkyleneinheit mit 0-18 C-Atomen, bei der auch eine oder mehrere $-CH_2$-Gruppen ersetzt sein können durch -O-, -S-,

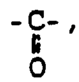

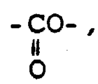

-CH=CH-, -C≡C-,

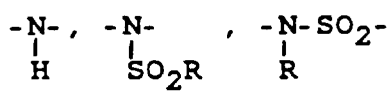

$-Si(CH_3)_2-$,
Cycloalkandiyl, Aren-diyl oder Hetero-Aren-diyl, wobei auch ein oder mehrere H-Atome der $-CH_2$-Gruppen durch F ersetzt sein können;
$R_g$ eine Reaktivgruppe (kuppelnde Funktionalität), z. B. -OH, $-CO_2H$, $-CO_2R$, $-N_2$, -NHR`, -SH,

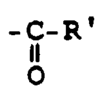

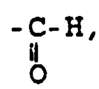

-CN, -N=C=O, -N=C=S, $-CH=CH_2$, $-Si(CH_3)_2Cl$, $Si(CH_3)_2OR$`, $-Si(OR)_3$, $-N_3$, Halogenid, -N≡C, $SO_2CH=CH_2$

Bevorzugt werden Verbindungen, in denen $C_y$ die eingangs beschriebenen Makrocyclen, Kryptanden oder Coronanden darstellt.

Ganz besonders bevorzugt werden Verbindungen, in denen $C_y$ die folgende Bedeutung hat:

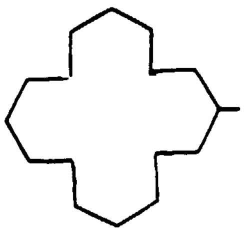 , 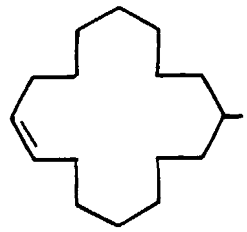 , 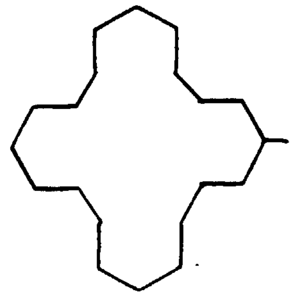 , 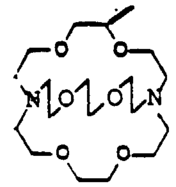

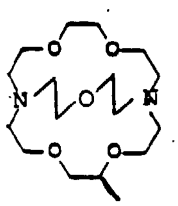 , 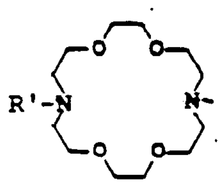 , 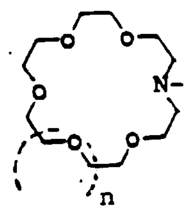 , 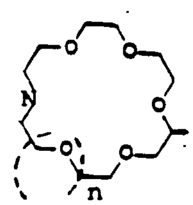 ,

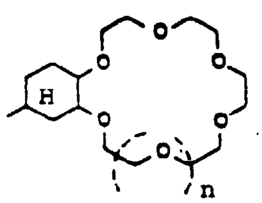 , 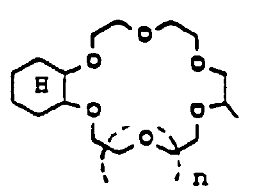 ,

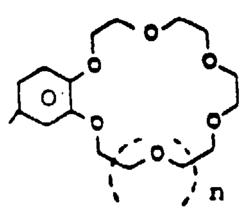 , 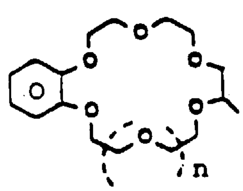 ,

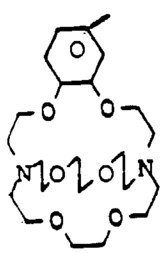 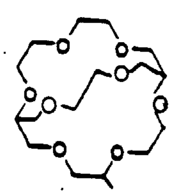 , 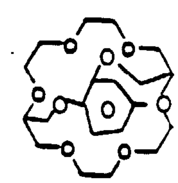

n: 0, 1 oder 2

Im höchsten Maße bevorzugt sind Verbindungen, in denen bedeuten:

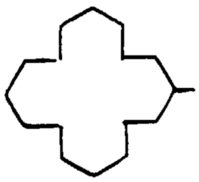 , 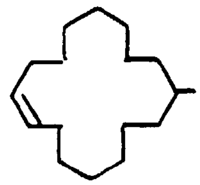 , 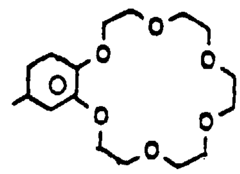 ,

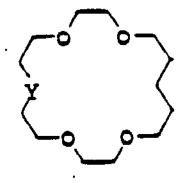 , 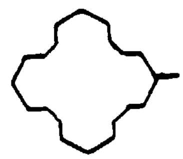

G $-O-(CH_2)_m-$, $-(CH_2)_m-$

Y -O- oder N-Alkyl oder N-Aryl

$R_g$ $-CO_2R'$, $-N=C=O$, $-Si(CH_3)_2OR'$, $-NH_2$, -OH

II Physisorption

Die amphiphilisierenden Verbindungen werden durch schwächere oder stärkere intermolekulare Anziehungskräfte an die Oberfläche der Orientierungsschichtmoleküle angelagert. Die Stärke der Ankopplung an die Oberfläche kann durch die Einbindung polarer oder polarisierbarer Gruppen erhöht werden.

Die positive Wirkung der amphiphilisierenden Verbindungen auf die Orientierungsschicht wird wesentlich verstärkt durch Flüssigkristallmischungen, die ebenfalls diese Verbindungen, insbesondere Coronanden und Kryptanden, enthalten.

Die erfindungsgemäß behandelte Orientierungsschicht in Displays bewirkt insbesondere eine Unterdrückung von Twist-Zuständen und Geisterbildern und somit eine Verbesserung des optischen Kontrasts.

Ferner kann mit Hilfe der amphiphilisierten Orientierungsschicht eine hochstabile Flüssigkristall-Schalt- und Anzeigevorrichtung hergestellt werden. Durch Zugabe der erfindungsgemäß einzusetzenden Verbindungen, insbesondere Coronanden und Kryptanden, zu Orientierungsschichten können die FLC-Mischungen durch Anlegen einer kontinuierlichen periodischen elektrischen Spannung in eine einheitliche und twistfreie "bookshelf" oder "quasi bookshelf"-Orientierung gebracht werden (Erläuterung der Begriffe: Dübal et al., Proc. 6th Intl. Symp. o. Electrets, Oxford, England (1988); Y. Sato et al. Jap. J. Appl. Phys. 28 L 483 (1989)).

Schockgeschädigte Flüssigkristalldisplays können bei Verwendung der amphiphilisierenden Susbtanzen in Orientierungsschichten durch Anlegen einer kontinuierlichen, periodischen Spannung wieder regeneriert werden, wie es auch schon bei Verwendung dieser Substanzen in FLC-Mischungen vorgeschlagen wurde (Deutsche Patentanmeldung P 40 11 805).

Die Erfindung wird durch die Beispiele näher erläutert:

Beispiele

Beispiel 1

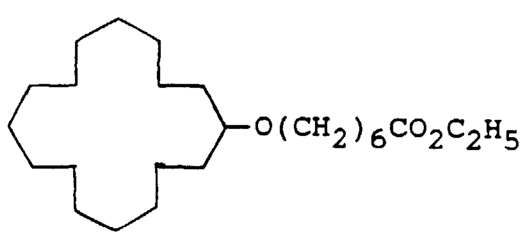

Eine Mischung von 15 ml 8-Cyclohexadecen-1-on, 10 ml Trimethylorthoformiat und 0.1 g Benzolsulfonsäure wird für 2h auf 60°C erwärmt; gebildets Methylformiat wird abdestilliert. Anschließend wird binnen 1h bei 120°C überschüssiges Trimethylorthoformiat abdestilliert.

Nach Zugabe von 10 ml 6-Chlor-hexanol-1 wird 1h auf 120°C erhitzt, wobei Methanol abdestilliert. Durch Destillation erhält man 18 g eines viskosen gelblichen Öls mit Kp. 140-165°C/0.05 mbar, ein Gemisch isomerer Cyclohexadienyl-6-chlor-hexylether.

Durch Hydrierung (80°C/100 bar) in THF unter Pd-Katalyse wird Cyclohexadecyl-(6-chlorhexyl)ether erhalten.

5 g dieser Verbindung werden mit 2 g NaCN sowie 0.5 g KJ in 50 ml DMF 2d auf 150°C erhitzt. Nach wäßriger Aufarbeitung und Extraktion mit Dichlormethan werden 5 g 6-Cyanohexylcyclohexadecyl-ether erhalten.

Eine Lösung dieser Verbindung in 100 ml Ethanol wird bei -10°C bis zur Sättigung mit HCl begast. Nach Vertreibung überschüssiger HCl bei 0°C im Stickstoffstrom wird unter Verwendung einer pH-Glaselektrode durch Zugabe von konz. NaOH auf pH 2 gebracht. Der erhaltene Kristallbrei wird in 150 ml $H_2O$ gegeben und mit Dichlormethan extrahiert. Der Extrakt ergibt nach chromatographischer Reinigung 1.5 g eines farblosen Öles bestehend aus...

Beispiel 2

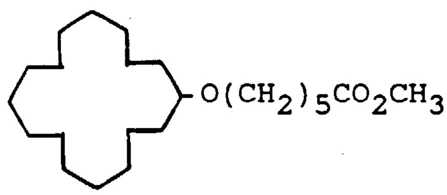

wird analog Beispiel 1 erhalten.

Beispiel 3

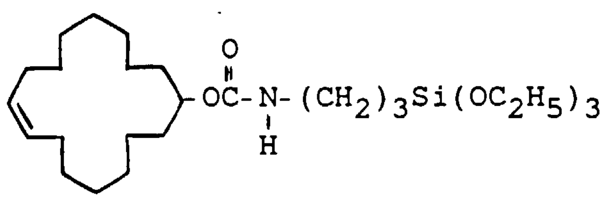

0.9 g 8-Cyclohexadecen-1-ol, hergestellt durch Reduktion von 8-Cyclohexadecen-1-on mit $NaBH_4$ in Ethanol, werden mit 1 ml 3-Isocyanatopropyl-triethoxysilan und 50 mg Triethylamin versetzt und 24h bei 80°C gehalten. Bei 90°C/0.1 mbar werden Leichtsieder entfernt. Der Rückstand erstarrt beim Erkalten wachsartig und weist im IR-Spektrum nur noch Spuren einer Isocyanat-Bande, dafür aber eine starke Bande (1700 $cm^{-1}$) der

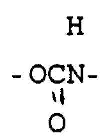 Gruppe,

auf. $^1H$-NMR: δ= 3.1 (q, 2H, $-NHCH_2$); 4.8 (m, 1H,

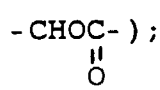

5.2 (m, 2H, -CH=CH-); 0.6 (m, $-CH_2Si$).

Nach GLC hat die Verbindung einen (extrapolierten) Kp. von 427°C.

Beispiel 4

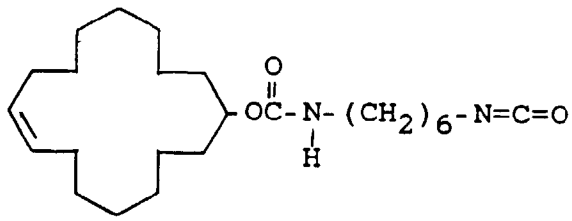

1 g 8-Cyclohexadecen-1-ol, hergestellt wie in Beispiel 3, wird zusammen mit 5 ml 1,6-Hexamethylendiisocyanat und 0.1 ml Triethylamin 24h auf 80°C erhitzt. Leichtsieder werden bei 110°C/0.1 mbar entfernt. Der Rückstand, 1.55 g eines viskosen Öles, weist im IR-Banden gleicher Intensität bei 2260 (Isocyanat) und 1700 $cm^{-1}$

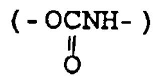

auf.

Beispiel 5

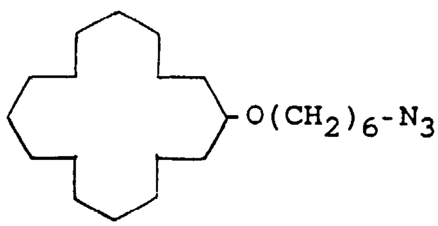

Eine Lösung von 4 ml 6-Chlorhexyl-cyclohexadecyl-ether, hergestellt wie in Beispiel 1 angegeben , in 20 ml DMF wird mit 2 g $NaN_3$ und 0.5 g KJ 48 h auf 50°C erhitzt. Es wird mit 100 ml $H_2O$ versetzt und viermal mit je 25 ml Dichlormethan extrahiert. Der Extrakt wird chromatographisch (Kieselgel, Dichlormethan) gereinigt. Man erhält 1.24 g einer farblosen Flüssigkeit, die im IR-Spektrum bei 2090 $cm^{-1}$ eine intensive Azid-Bande und im $^1H$-NMR bei $\delta$= 3.1-3.4 ein Multiplett, repräsentativ für 5 Protonen relativ zum Rest der aliphatischen Protonen bei 1.3 ppm, aufweist. Aus dem GLC kann ein extrapolierter Kp. von 396°C/1000 mbar bestimmt werden.

Beispiel 6

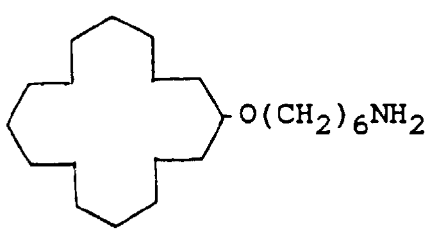

4 ml 6-Chlorhexyl-cyclohexadecyl-ether, hergestellt wie in Beispiel 1 angegeben, wird in einem Autoklaven mit 40 ml konz. wäßriger Ammoniaklösung sowie 0.1 g KJ 20 h auf 130°C erhitzt. Nach Abkühlung wird in 100 ml 2n $Na_2CO_3$-Lösung gegeben und dreimal mit je 50 ml Dichlormethan extrahiert. Durch Destillation des Extraktes werden 1.8 g Produkt erhalten;

$^1H$-NMR: $\delta$= 3.3 (m, 3H, $-CHCH_2-$); 2.75 (t, 2H, $-CH_2NH_2$)

Beispiel 7

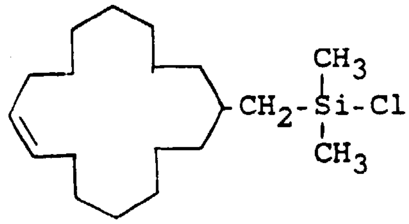

Beim Raumtemperatur werden 10.7 g Triphenylmethylphosphoniumbromid zu einer Mischung von 20 ml n-Butyllithium (1.55 molar in Hexan) und 60 ml Diethylether gegeben. Nach 4h bei Raumtemperatur werden 7.3 g 8-Cyclohexadecen-1-on zugetropft und 18h zum Rückfluß erhitzt. Nach Filtration wird das Lösungsmittel abdestilliert und der Rückstand chromatographisch gereinigt ($SiO_2$, Hexan/Ethylacetat 95:5); es resultieren 2.5 g 1-Methylen-8-cyclohexadecen, ausgewiesen durch ein $^1$H-NMR-Spektrum:
$\delta$= 5.2 (t, -CH=CH-); $\delta$= 4.75 (s, $C=CH_2$).
2.5 g obiger Verbindung werden mit 2.0 ml Dimethylchlorsilan und 0.5 ml Platindivinyl-tetramethyldisiloxan-Komplex (10 % in Xylol) in einem Druckgefäß 24h auf 60°C erwärmt. Nach Destillation resultieren 3.1 g Produkt mit Kp. 105-110°C/0.01 mbar; $^1$H-NMR: $\delta$= 5.2 (m, 2H, -CH=CH-); 0.85 (m, 2H, $-CH_2Si$); 0.3 (s, 6H, $-CH_3$).

Beispiel 8

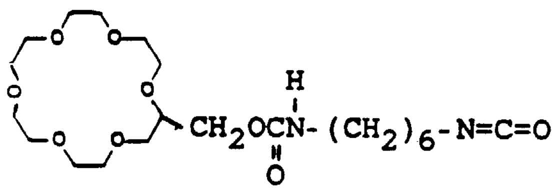

Eine Mischung aus 0.6 g Hydroxymethyl-18-crown-6 (hergestellt nach Montanari und Tundo, THL 1979, 5055), 2.0 ml 1,6-Diisocyanatohexan und 50 mg Triethylamin wird 24h auf 80°C erhitzt. Leichtsieder werden bei 100°C/0.1 mbar entfernt. Der Rückstand, 0.8 g eines viskosen Öles, besitzt im IR-Spektrum Banden gleicher Intensität bei 2260 (Isocyanat) und 1700 $cm^{-1}$ (Carbamat). Aus dem GLC ergibt sich ein extrapolierter Kp. von 444°C/1000 mbar.

Beispiel 9

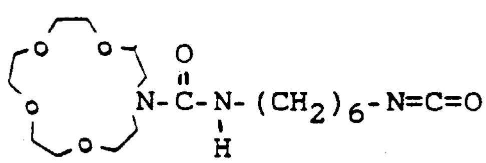

wird analog Beispiel 8 hergestellt.

Beispiel 10

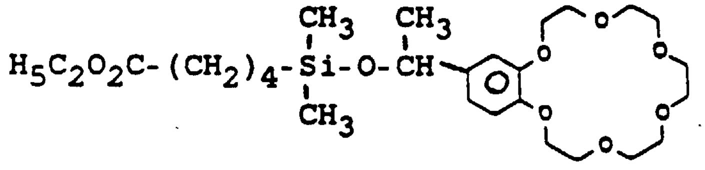

Zu einer Lösung von 0.43 ml Essigsäureanhydrid und 0.69 ml Essigsäure in 10 ml Polyphosphorsäure werden 1 g Benzo-18-crown-6 gegeben und 2h bei 70°C gerührt. Nach Zugabe von 65 g Eis wird weitere 2h gerührt. Die nach fünfmaliger Extraktion mit Dichlormethan erhaltene organische Phase wird zur Trockne gebracht und der Rückstand mit Heptan ausgekocht. Aus der Heptanphase resultieren 0.7 g Acetylverbindung v. Schmp. 77°C.

Eine Lösung von 1.6 g obiger Acetylverbindung in 90 ml Ethanol wird mit 0.33 g $NaBH_4$ versetzt und 3h bei 20°C gerührt. Nach üblicher Aufarbeitung werden 1.4 g Hydroxyethylverbindung erhalten.

Eine Lösung von 1.4 g dieser Hydroxyethylverbindung in 5 ml DMF wird bei 20°C nacheinander mit 1.06 g 5-(Chlordimethylsilyl)pentansäureethylester sowie 0.53 g Imidazol versetzt und 7h bei 50°C gerührt. Nach dem Abkühlen wird in 20 ml eiskalte 20 %ige Citronensäurelösung gegossen. Man extrahiert 4 mal mit Dichlormethan, wäscht den Extrakt mit Citronensäurelösung sowie mit gesättigter Kochsalzlösung, trocknet und verdampft das Lösungsmittel. Nach chromatographischer Reinigung werden 0.7 g Produkt erhalten. Charakterisische Signale des $^1$H-NMR: $\delta$= 0.1-0.5 (m, 8H, Si-$CH_3$ + Si-$CH_2$); 1.3 (t, 3H, -$CH_2CH_3$)

Beispiel 11

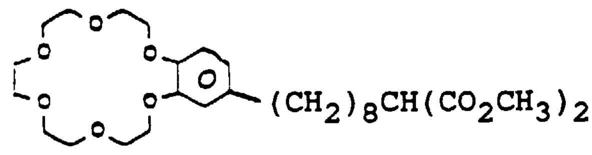

Analog Beispiel 10 wird Benzo-18-crown-6 mit 6-Brom-hexansäure in die entsprechende 6-Brom-hexanoylbenzo-18-crown-6 überführt.

4,5 mmol dieser Verbindung werden in 35 ml Trifluoressigsäure gelöst, mit 1.8 ml Triethylsilan versetzt. Nach 48h bei Raumtemperatur wird mit Wasser und Dichlormethan versetzt, die organische Phase abgetrennt und getrocknet. Das Lösungsmittel und Hexaethylsiloxan werden im Vakuum entfernt.

1h nach Zugabe von 2.1 mmol NaH zu einer Lösung von 2.1 mmol Malonsäuredimethylester in 30 ml Methanol werden 2.1 mmol obiger ω-Bromoctyl-benzo-18-crown-6 zudosiert. Nach 4h bei 70°C wird eingedampft und zwischen $H_2O$ und Dichlormethan verteilt. Die organische Phase wird chromatographisch gereinigt. Charakterisische Signale des $^1$H-NMR-Spektrums: $\delta$= 2.5 (t, br, 2H, Aryl-$CH_2$-); 3.4 (m, 3H, -$CH(CO_2CH_3)_2$ + -$CH_2CH(CO_2CH_3)_2$)

Beispiel 12

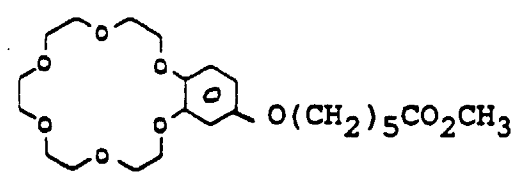

1 mmol Hydroxy-benz-15-crown-5, gelöst in 20 ml DMF, wird mit 2 mmol NaH versetzt. Nach 30 min wird eine Lösung von 1.3 mmol 5-Brom-hexansäuremethylester in 4 ml DMF zugegeben und 4 h auf 60°C erhitzt. Nach Zugabe von HCl bis zur Neutralisation wird das Lösungsmittel abgedampft, der Rückstand in Wasser/Dichlormethan aufgenommen und die organische Phase chromatographisch gereinigt. Das $^1$H-NMR- und IR-Spektrum des erhaltenen Öles entsprechen der Struktur

Beispiel 13

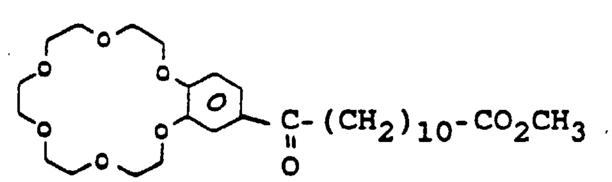

Wie in Beispiel 10 beschrieben, werden Benzo-18-crown-6 und 11-Cyano-undecansäuremethylester in Polyphosphorsäure umgesetzt.

Die erhaltene ω-Cyano-undecanoyl-benzo-18-crown-6 wird, wie in Beispiel 1 beschrieben, mit HCl in Ethanol in die Zielverbindung überführt.

Beispiel 14

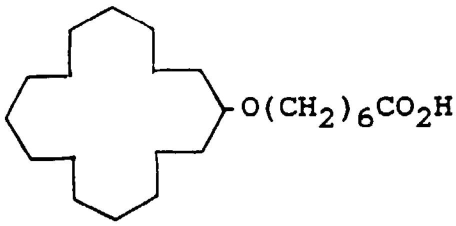

5 g Nitril, hergestellt analog Beispiel 1, werden mit 10 ml konz. NaOH und 20 ml Ethylenglykol 48h zum Sieden erhitzt. Es wird auf 50 ml $H_2O$ gegeben und mit HCl auf pH 1 gebracht. Durch Extraktion mit Diethylether werden 4.1 g eines viskosen Öles erhalten, die chromatographisch (Kieselgel, Dichlormethan/Ethylacetat 9:1) gereinigt werden. Man erhält 3.2 g eines Öles; im IR-Spektrum eine Bande bei 1710 $cm^{-1}$ (-COOH). Laut GLC hat die Substanz einen extrapolierten Sdp. von 413°C/1000 mbar.

Beispiel 15

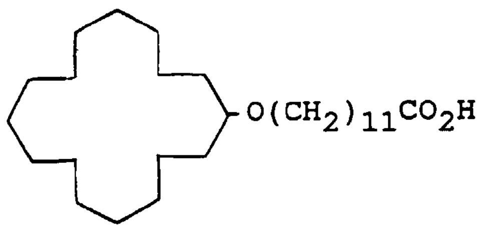

Wie in Beispiel 1 beschrieben, werden 6 ml 8-Cyclohexadecen-1-on und 4 ml Orthoameisensäureester umgesetzt.

Bei 120°C werden 5 g 12-Hydroxy-dodecan-1-carbonsäure zugegeben und nach 1h bei 120°C/0.1 mbar Leichtsieder entfernt. Der nach Erkalten kristallisierende Rückstand wird in 50 ml THF mit 0.2 g Pd/C bei 80°C/100 bar hydriert und chromatographisch (Kieselgel, Dichlormethan) gereinigt, 3.5 g farbloses Öl, mit (lt. GLC) extrapoliertem Sdp. von ..°C/1000 mbar.

Beispiel 16

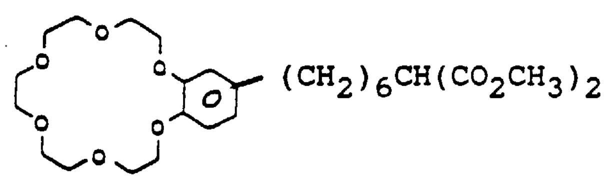

wird analog Beispiel 11 hergestellt; nach GLC extrapolierter Sdp. 437°C/1000 mbar.

Beispiel 17

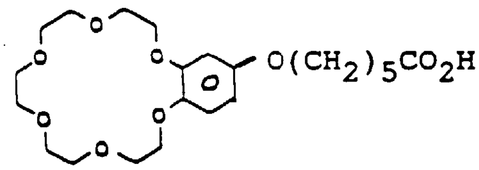

wird aus Beispiel 12 durch Verseifung mit ethanolischer KOH, Ansäuern mit HCl, Extraktion mit Dichlormethan und chromatographische Reinigung (RP-18, Dichlormethan/Methanol 97:3) als farbloses Öl erhalten.

Bau von Testzellen

Zum Nachweis der vorteilhaften Eigenschaften der erfindungsgemäßen FLC-Displays wurden Testzellen hergestellt, die mit ferroelektrischen Flüssigkristallmischungen gefüllt und anschließend geprüft wurden. Dazu wurden Glasplatten, die mit einer 4 x 4 $mm^2$ großen Elektrodenfläche aus Indium-Zinn-Oxid (ITO) beschichtet waren, mit einer wäßrigen Tensidlösung und anschließend mit Ethanol gereinigt und danach entweder mit einem Naßfilm aus einer Lösung einer Polyamidcarbonsäure-Lösung im N-Methylpyrrolidon (NMP) oder mit einer wäßrigen Lösung eines Polyvinylalkohols (PVA) beschichtet. Die Beschichtung wurde mit einem "Spin-coater" durchgeführt, kann aber auch mit anderen, z.B. Druck- oder Tauchverfahren erfolgen. Die Orientierungsschicht wird dann mit einem samtartigen Stoff gerieben und die Gläser zu den fertigen Testzellen zusammengeklebt.

In den folgenden Beispielen wurden die die hydrophilen Eigenschaften der Orientierungsschicht vermindernden Stoffe bevorzugt auf drei Arten auf bzw. in der polymeren Orientierungsschicht aufgebracht und zwar durch:

A) Einmischen der amphiphilisierenden Stoffe in die Lösung der monomeren Vorstufen des Orientierungsschicht-Materials bzw. Einmischen in gelöste polymere Orientierungsschicht-Materialien und "Spin-coaten" mit diesen Lösungen, wobei die monomeren Vorstufen anschließend polymerisiert werden.

B) "Spin-coaten" der monomeren Orientierungsschicht-Vorstufe bzw. polymeren Orientierungsschicht-Materialien und anschließendes Beschichten mit den amphiphilisierenden Stoffen, wobei diese reaktive Gruppen enthalten, die eine chemische Anbindung an die Orientierungsschicht erlauben. Bei den monomeren Orientierungsschicht-Vorstufen (z. B. der Polyimide) kann dabei die chemische Anbindung in Konkurrenz zu der Imidisierungsreaktion erfolgen. Bei Verwendung von bereits polymerisierten Orientierungsschichten müssen dagegen zusätzlich noch freie Funktionalitäten im Polymer bereitgestellt sein (z.B. freie Carboxyl-, Hydroxyl- oder Estergruppen).

C) "Spin-coaten" der amphiphilisierenden Verbindungen auf die fertig aufgebrachte und geriebene Orientierungsschicht. Die Haftung beruht in diesem Fall auf Wechselwirkungen physikalischer Art.

Anschließend wurden die Glasplatten unter Verwendung von Abstandhaltern zu Flüssigkristalltestzellen bei paralleler Reiberichtung mit 2,0 µm Abstand verklebt. Die so erhaltenen Testzellen wurden in Hinsicht auf ihre elektrooptischen Kenngrößen für eine Reihe unterschiedlicher amphiphilisierender Stoffe untersucht.

Im Fall B wird die Reibeinformation nach Aufbringen der Zusatzschicht aufgeprägt, während im Fall C vor der Aufbringung der Zusatzstoffe gerieben wird.

Als Beispiele für die im erfindungsgemäßen Display auf die Orientierungsschicht aufgebrachten Substanzen (als Zusatzschicht) dienten die nachfolgenden Verbindungen.

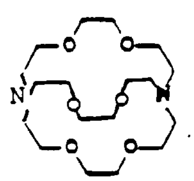

Z 1

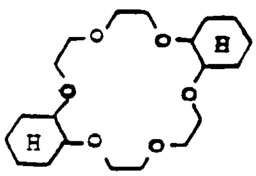

Z 2

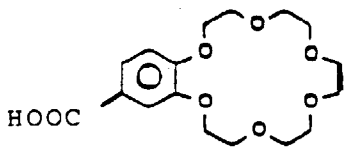

Z 3

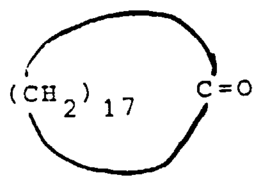

Z 4

$H_{17}C_8$-COOH Z5

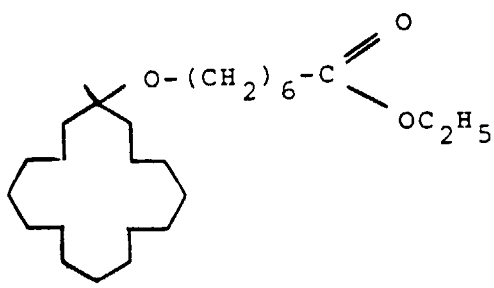

Z 6

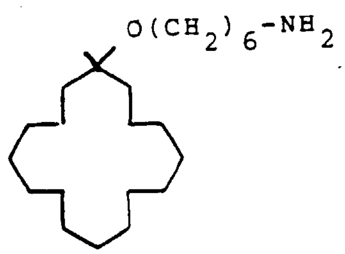

Z 7

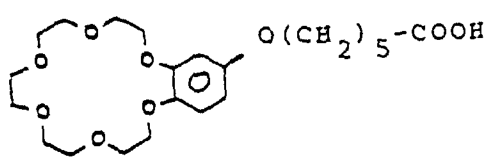

Z 8

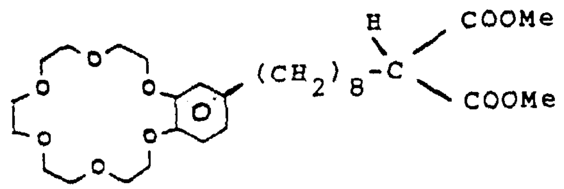

Z 9

Als Beispiel für eine dem erfindungsgemäßen Display zugrunde liegende Orientierungsschicht diente eine Schicht aus einem Polyimid, das aus folgenden Vorstufen durch Polymerisation erhalten wurde (siehe Encyclopedia of Polymer Science and Engineering, 2nd Ed., Vol. 12, pg. 364-383, John Wiley & Sons, New York 1988 Eds. H.F. Mark, N.M. Bikalis, C.G. Overberger, G. Menges),

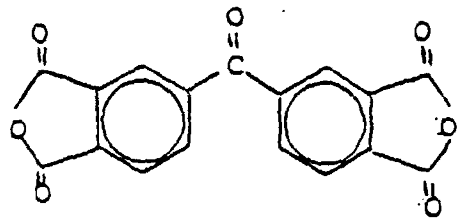

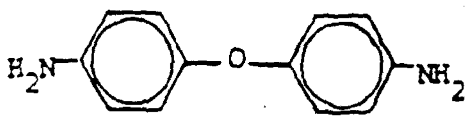

bzw. ein Polyvinylalkohol

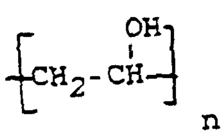

Die eingesetzte FLC-Mischung M1 besaß folgende Zusammensetzung (in Mol%)

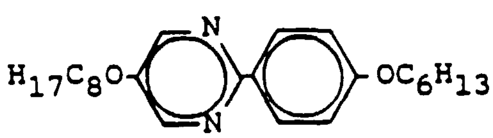

11.74

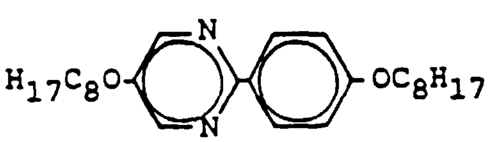

3.94

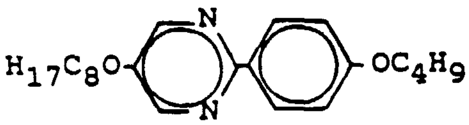

12.95

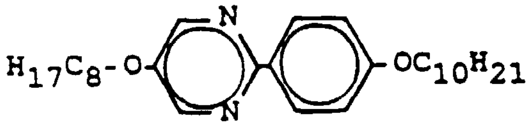

7.13

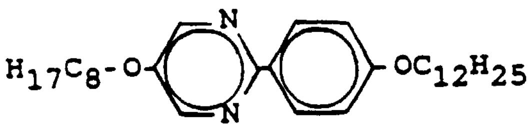

7.15

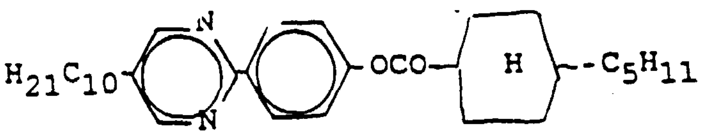

16.70

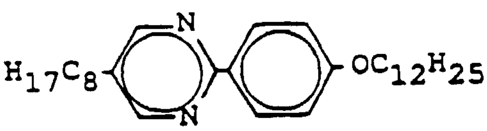

10.53

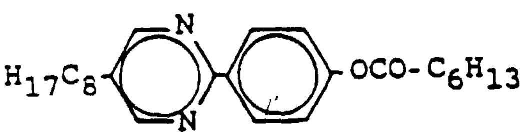

17.53

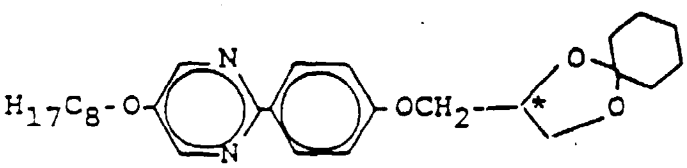

(S)

4.53

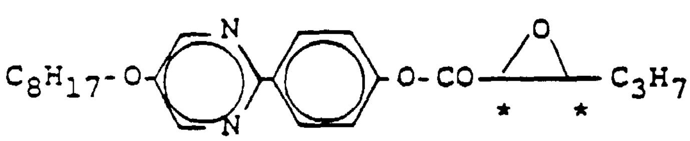

2.70

(R) cis (R)

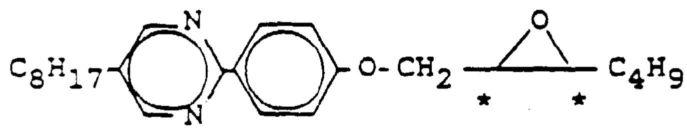 5.10

(S) trans (S)

und die Phasenfolge $S_c$* 69.8 $S_A$* 75 N* 89.1 I, mit einer spontanen Polarisation von 30 $nC \cdot cm^{-2}$ bei einer Temperatur von 20°C.

Die eingesetzte FLC-Mischung M2 besaß folgende Zusammensetzung (in Mol%)

99 Mol%  FLC- Mischung M1

1 Mol%

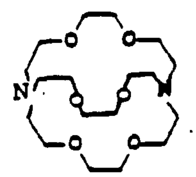

und die Phasenfolge $S_c$* 61 $S_A$* 65 N* 85 I mit einer spontanen Polarisation von 26 $nC \cdot cm^{-2}$ bei einer Temperatur von 20°C.

Die FLC-Mischung M3 besaß die Zusammensetzung (in Mol%)

12.28 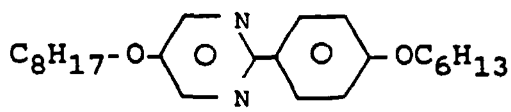

4.13 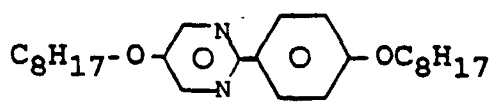

13.56 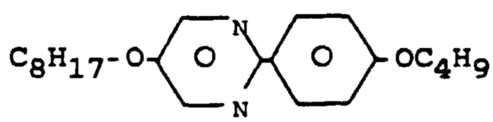

7.45 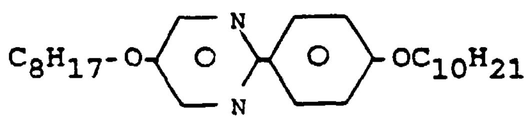

7.48 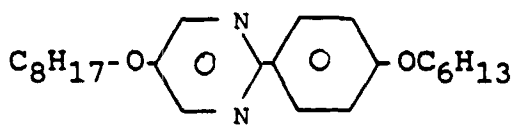

17.46 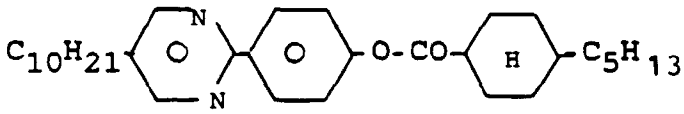

11.00 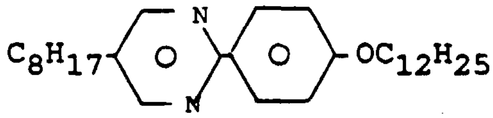

18.34 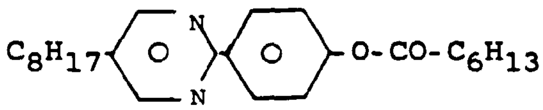

7.00 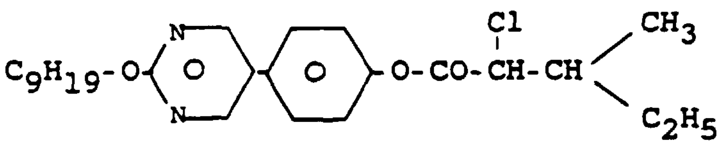 (25,35)

1.30 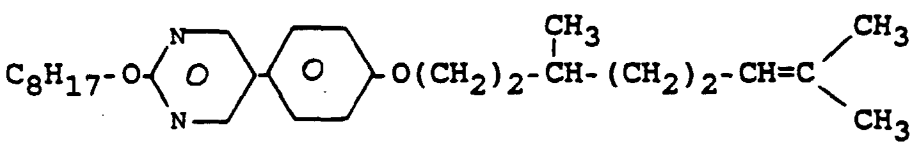

und die Phasenfolge $S_C$* 69 $S_A$* 75 N* 82 I bei einer spontanen Polarisation von -9.6 $nC \cdot cm^{-2}$.

Anwendungs-Beispiel 1

Die Messungen beziehen sich auf ein Display mit beigemischten Zusatzstoffen (wie unter A beschrieben), wobei die amphophilisierenden Verbindungen den gelösten Vorstufen einer Polyimid-Orientierungsschicht zugesetzt wurden. Dazu wurden die Polyimidvorstufen mit jeweils 10 Gew.-% von Z2 bzw. 5 Gew.-% von Z4 (bezogen auf den Festkörper) versetzt und damit eine 2,5 %ige Lösung in N-Methyl-Pyrrolidon hergestellt. Diese Lösung wurde dann durch "spincoaten" auf Gläser gebracht, die mit ITO-Elektroden beschichtet sind. Zur Polymerisation und anschließenden Imidisierung zum Polyimid wurde 1-2 Stunden auf eine Temperatur von 200°C erhitzt. Nach dem Reiben der Gläser erfolgte das Kleben der Substrate zu den fertigen Testzellen. Die Zelldicke von 2 µm wurde durch Abstandshalter aus Glas eingestellt.

Die Schaltwinkel der FLC-Mischung M2 in den erfindungsgemäßen Testzellen und konventionellen Testzellen (E. H.C. Co., LTD. Tokyo) in der "Chevron"-Geometrie sind in Tabelle 1 zusammengestellt.

Tabelle 1:

| Meßzelle | Schaltwinkel (2 $\theta_{eff}$) |
|---|---|
| Referenzzelle | 16° |
| Zelle mit Z2 | 20° |
| Zelle mit Z4 | 22° |

In den erfindungsgemäßen Testzellen zeigt die FLC-Mischung mit amphiphilisierter Orientierungsschicht deutlich höhere Schaltwinkel, was zu einer höheren Helligkeit des Hellzustandes führt. Parallel dazu verringert sich auch die Transmission des Dunkelzustandes, d.h. der optische Kontrast wird stark verbessert.

Die Anwendungs-Beispiele 2-5 beziehen sich auf das nachträgliche Aufbringen der Zusatzschicht (wie unter B

beschrieben) und chemische Anbindung an die Orientierungsschicht.

Anwendungs-Beispiel 2

Das Polyimid von Anwendungs-Beispiel 1 wurde nicht vollständig imidisiert, so daß noch freie funktionelle Gruppen zur Anbindung der amphiphilisierenden Verbindungen vorhanden waren. Die Vorimidisierung bei einer Temperatur von 100°C erfolgte für die Verbindungen Z3 und Z5 wenige Sekunden, während für Z4 20 min vorimidisiert wurde. Danach wurde die jeweils 3 %ige Lösung der Verbindungen in Methyl-Ethyl-Keton aufgeschleudert und die Gläser der Testzellen bei 200°C 1 h getempert, um die vollständige Imidisierung der Orientierungsschicht und eine chemische Anbindung der Zusatzschicht zu bewirken.

In die erfindungsgemäßen SSFLC-Zellen wurde die FLC-Mischung M2 eingefüllt und die Meßergebnisse mit denen in konventionellen Testzellen verglichen (in allen Zellen lag die "Chevron"-Geometrie vor).

Dazu wurde zusätzlich zum Schaltwinkel (2 $\theta_{eff}$) das Flächenverhältnis von sehr dunklen uniformen Bereichen zu den bläulich erscheinenden "twist"-Bereichen in den Testzellen zur Charakterisierung herangezogen.

Die entsprechenden Maßgrößen sind in Tabelle 2 zusammengefaßt.

Tabelle 2:

| Charakterisierung der Testzellen mit aufgeschleuderter, chemisch angebundener Zusatzschicht in der "Chevron"-Textur) | | |
|---|---|---|
| Meßzelle | Schaltwinkel (2 $\theta_{eff}$) | Flächenverhältnis uniforme/twist-Textur |
| Referenzzelle | 16° | 0,05 |
| Zelle mit Z4 | 21° | 4 |
| Zelle mit Z3 | 18° | 1,5 |
| Zelle mit Z5 | 23° | 2 |

Auch in diesem Beispiel zeigen die erfindungsgemäßen Testzellen höhere Schaltwinkel und wesentlich geringere Flächenanteile mit "twist"-Bereichen (die bekanntlich den Kontrast verringern).

Anwendungs-Beispiel 3

Das Polyimid von Anwendungs-Beispiel 1 wurde vollständig bei 300°C imidisiert und der Zusatzstoff Z7, gelöst in Isopropanol, aufgeschleudert. Die chemische Anbindung erfolgte dann, durch Erwärmen des Substrats (30 min, bei 180°). Der überschüssige, nicht gebundene Zusatzstoff wurde mit viel Isopropanol im Ultraschallbad abgewaschen. Der weitere Bau der Testzellen erfolgte auf die schon beschriebene Weise.

Zur Charakterisierung der Testzellen mit der erfindungsgemäßen Orientierungsschicht wurden die Mischung M1 und M3 verwendet und die Meßergebnisse mit denen in Zellen ohne Zusatzschicht verglichen. Bei allen Zellen lag die "Chevron"-Textur vor.

Auch hier wurde der Schaltwinkel 2$0_{eff}$ und das Flächenverhältnis von sehr dunklen uniformen Bereichen zu den bläulich erscheinenden "twist"-Bereichen in den Testzellen zur Charakterisierung herangezogen. Die Meßgrößen sind in Tabelle 3 zusammengefaßt.

Tabelle 3:

| Testzellen mit aufgeschleuderter, chemisch angebundener Zusatzschicht Z7 in der "Chevron"-Textur | | | |
|---|---|---|---|
| | | Schaltwinkel 2$0_{eff}$ | Flächenverhältnis uniforme/twist-Textur |
| M1 | Referenzzelle | 15° | 0 |
| | Zelle mit Z7 | 22° | 19 |
| M3 | Referenzzelle | 17° | 0 |
| | Zelle mit Z7 | 23° | 100 |

Tabelle 3 verdeutlicht die Vorteile der Zusatzstoffe. Sowohl die Steigerung des Schaltwinkels, als auch das Auftreten eines uniformen Dunkelzustands ermöglichen eine hohe Helligkeit des hellen Speicherzustands und einen hohen optischen Kontrast.

Anwendungs-Beispiel 4

Eine 1.5 %ige wäßrige Lösung eines Polyvinylalkohols wurde durch "spin-coaten" auf Gläser gebracht, die mit ITO-Elektroden beschichtet waren. Die Trocknung des Polymernaßfilms erfolgte dann bei einer Temperatur von 180°C. In einem weiteren Schritt wurde der Zusatzstoff Z6, der geringe Mengen der freien Säure enthielt und in Isopropanol gelöst war, aufgeschleudert. Die chemische Anbindung erfolgte bei Erwärmung auf 180°C. Nach dem Reiben der Zellsubstrate wurden diese zu den eingesetzten Testzellen zusammengeklebt.

Zur Charakterisierung der Testzellen wurden die Mischungen M1 und M2 eingesetzt. Die Meßergebnisse mit der Mischung M1 in der "Chevron"-Geometrie sind in Tabelle 4 zusammengestellt.

Tabelle 4:

| Testzelle mit aufgeschleuderter chemisch angebundener Zusatzschicht Z6 in der "Chevron"-Geometrie | | |
|---|---|---|
| | Schaltwinkel 2 $0_{eff}$ | Flächenverhältnis uniforme/twist-Textur |
| Referenzzelle<br>Zelle mit Z6 | 14°<br>21° | O = 100% twist Textur<br>= 100% uniforme Textur |

Der Vorteil der erfindungsgemäßen Orientierungsschicht wird besonders in der "Bookshelf"-Geometrie deutlich. Dazu werden die Zelle mit Z6 und die Referenzzellen (E.H.C. CO. LTD., Tokyo), gefüllt mit der FLC-Mischung M2, einer Rechteckspannung von 10 Hz bei einer Amplitude von ca. 10-15 V/µm unterworfen (siehe R. Dübal et al. in "Proceedings of the 6th Intl. Symp. on Electrets", Oxford, England 1988 Eds D.K. Das-Gypra and A.W. Pattullo), um die gewünschte Textur zu erzeugen.

Die Zellen wurden bei Raumtemperatur mit einem Ansteuerschema versorgt, das aus bipolaren Schaltpulsen besteht. Die Zelle befand sich in einem Polarisationsmikroskop, in dessen Strahlengang eine Photodiode angebracht ist. Als Meßgröße diente der optische Kontrast. Durch Variation der Pulsamplituden kann bei diesem Ansteuerschema das maximal mögliche Verhältnis von Schaltpulsamplitude zu Datenpulsamplitude (= maximaler Bias) für einen Multiplexbetrieb ermittelt werden. Dieses Verhältnis sollte möglichst groß sein, da nur bei geringer Datenpulsamplitude ein entsprechend hoher Kontrast möglich wird. Tabelle 5 zeigt die maximalen Biaswerte und den optischen Kontrast bei der oben beschriebenen Adressierung.

Tabelle 5:

| Optischer Kontrast und maximaler Bias der FLC-Mischung M2 in Zellen mit Zusatzstoff Z6 und entsprechenden Referenzzellen (ohne Zusatzstoff). Die Ergebnisse beziehen sich auf die "Bookshelf"-Geometrie | | |
|---|---|---|
| | maximale Bias | Kontrast (B = 6.5) |
| Referenzzelle<br>Zelle mit Z6 | 5<br>6.5 | 8<br>60 |

Anwendungs-Beispiel 5

Die Zusatzstoffe Z8 und Z9 wurden, wie in Anwendungs-Beispiel 4 beschrieben, an einen Polyvinylalkohol angebunden.

Die Test- und Referenzzellen wurden mit der Mischung M3 gefüllt und der Schaltwinkel, sowie die Ausbildung der uniformen Textur in der "Chevron"-Geometrie zur Charakterisierung der Zellen herangezogen. Die Ergebnisse sind in Tabelle 6 zusammengefaßt.

Tabelle 6:

**Verhältnis von uniform/twist-Textur und effektiver Schaltwinkel der FLC-Mischung M3 in Zellen mit Z8/Z9 Zusatzschicht und in einer Referenzzelle ohne Zusatzstoffe. Die Ergebnisse beziehen sich auf die "Chevron"-Geometrie.**

| | Schaltwinkel $2\,\theta_{eff}$ | Flächenverhältnis uniform/twist Textur |
|---|---|---|
| Referenzzelle | 17° | 0 |
| Zelle mit Z8 | 25° | ∞ = 100% uniforme Textur |
| Zelle mit Z9 | 26° | ∞ = 100% uniforme Textur |

Durch den Einsatz der Zusatzstoffe Z8 und Z9 konnte die uniforme Textur vollständig erzeugt werden. Außerdem ist eine deutliche Erhöhung des Schaltwinkels zu erkennen, wodurch sich sowohl die Helligkeit des Hellzustands, als auch der optische Kontrast verbessert.

Für weitere Untersuchungen wurde die FLC-Mischung M1 in Testzellen mit dem Zusatzstoff Z9 und entsprechende Referenzzellen (E.H.C. Co. LTD., Tokyo) gefüllt. Die Zellen wurden mit einem Rechteckfeld bei einer Frequenz von 10Hz und einer Amplitude von 10-15V/µm behandelt, um die "Bookshelf"-Geometrie zu erzeugen. Die Zellen wurden bei Raumtemperatur mit dem in Anwendungs-Beispiel 4 beschriebenen Ansteuerschema versorgt und der maximal mögliche Bias sowie der optische Kontrast zur Charakterisierung der Zellen herangezogen. Die Ergebnisse sind in Tabelle 7 zusammengestellt.

| | maximaler Bias | Kontrast (B=4) |
|---|---|---|
| Referenzzelle | nicht meßbar | 1 |
| Zelle mit Z9 | 4 | 30 |

Aufgrund des oben beschriebenen "surface-memory"-Effekts ist die Referenzzelle mit diesem Ansteuerschema nicht schaltbar, da die FLC-Mischung M1 keinen Komplexliganden für Ionen enthält. Der optische Kontrast ist damit eins, bei gleicher Transmission von Hell- und Dunkelzustand.

Die Testzelle mit Zusatzstoff Z9 ist im Gegensatz dazu auch mit FLC-Mischungen, die keine Komplexliganden für Ionen enthalten, schaltbar. Der chemisch angebundene Kronenether unterdrückt nicht nur die für den optischen Kontrast schädlichen Twist-Zustände, sondern beseitigt auch den "surface-memory"-Effekt und führt somit zu einer drastischen Verbesserung des optischen Kontrast und des Schaltverhaltens.

Anwendungs-Beispiel 6

Die Versuche beschreiben das Aufbringen der Zwischenschicht auf die fertig geriebene Orientierungsschicht (siehe Punkt C). Die Vorstufen des Polyimids von Anwendungs-Beispiel 1 wurden dazu in N-Methylpyrrolidon gelöst und durch "Spin-coaten" auf die Glassubstrate aufgebracht. Anschließend wurde bei einer Temperatur von 200°C 3 Stunden lang imidisiert und danach die Polyimidoberfläche mit einer Reibemaschine gerieben.

Das Auftragen der Zusatzstoffe, die in Aceton zu 0,5 Gew.-% gelöst waren, erfolgte ebenfalls durch Aufschleudern. Nach dem Trocknen der Zusatzschichten, bestehend aus Z1 wurden die Glassubstrate zu den fertigen Testzellen zusammengeklebt.

Zur Charakterisierung der erfindungsgemäßen Testzellen wurde auch in diesem Fall der Tiltwinkel ($\theta_{eff}$) herangezogen. Tabelle 7 faßt die Ergebnisse für die FLC-Mischung M1 zusammen.

Tabelle 8 :

| Ergebnisse mit Testzellen, die eine physikalisch angebundene Zusatzschicht enthalten | |
|---|---|
| Meßzelle | Schaltwinkel (2 $\theta_{eff}$) |
| Referenzzelle | 16° |
| Zelle mit Z1 | 23° |

## Patentansprüche

1. Flüssigkristalldisplay enthaltend transparente Trägerplatten, Elektroden, mindestens einen Polarisator, ein ferroelektrisches flüssigkristallines Medium sowie mindestens eine Orientierungsschicht, die innerhalb der Schicht oder an der Oberfläche eine Komponente enthält, die die Orientierungsschicht amphiphilisiert, dadurch gekennzeichnet, daß die amphiphilisierende Komponente ein Coronand, ein Kryptand oder eine makrocyclische Verbindung der Formel (VI) ist,

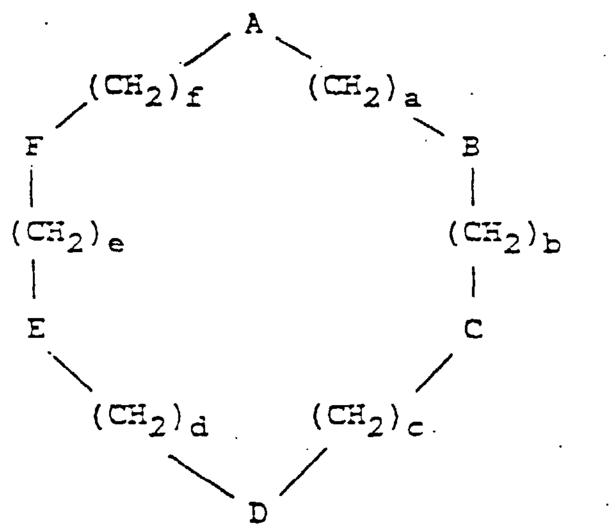

VI

wobei

a, b, c, d, e, f unabhängig voneinander eine ganze Zahl von Null bis 4, wobei a + b + c + d + e + f ≥ 7 ist, und

-A-, -B-, -C-, -D-, -E-, -F- gleich oder verschieden $-CH_2-$, -CHR'-, -CH=CH-, -CR=CR'-, -C≡C-,

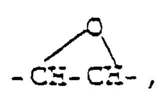

-CO-, -COO-,

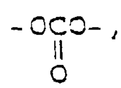

-CONH-, -CONR'-, -NR'-,

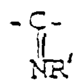 , 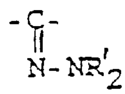 , 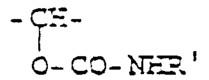 , 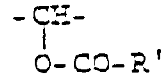 , 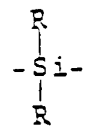 ,

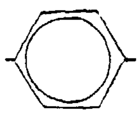 , 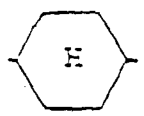 , 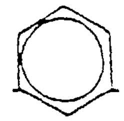 , 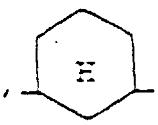 , 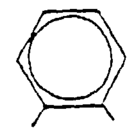 , 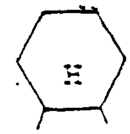

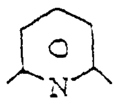 , 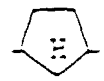 , 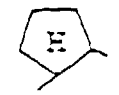 , 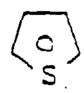 , 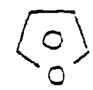 , .

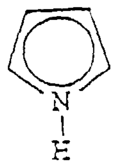 oder 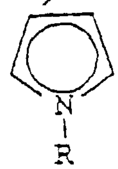

wobei

R gleich Alkyl mit 1 bis 12 C-Atomen und
R' gleich Alkyl mit 1 bis 12 C-Atomen, wobei eine -$CH_2$-Gruppe durch -O-, -COO- oder -OCO- ersetzt sein kann, Phenyl oder Cl, F oder CN bedeuten kann.

2. Flüssigkristalldisplay gemäß Anspruch 1, dadurch gekennzeichnet, daß die amphiphilisierende Komponente eine zusätzliche Schicht zwischen der Orientierungsschicht und dem ferroelektrischen flüssigkristallinen Medium ist.

3. Flüssigkristalldisplay gemäß Anspruch 1, dadurch gekennzeichnet, daß die amphiphilisierende Komponente direkt in die Orientierungsschicht eingebracht ist.

4. Flüssigkristalldisplay gemäß Anspruch 2, dadurch gekennzeichnet, daß die amphiphilisierende Komponente an das Material der Orientierungsschicht durch chemische Reaktion angeknüpft ist.

5. Flüssigkristalldisplay gemäß Anspruch 1 bis 4, dadurch gekennzeichnet, daß die Orientierungsschicht aus einem Polyimid, Polyamid oder Polyvinylalkohol besteht.

6. Flüssigkristalldisplay gemäß Anspruch 5, dadurch gekennzeichnet, daß die Orientierungsschicht 0,01 bis 50 Gew.-% insbesondere 0,1 bis 25 Gew.-%, der amphiphilisierneden Komponente enthält.

7. Flüssigkristalldisplay nach Anspruch 1, dadurch gekennzeichnet, daß es zusätzlich eine Isolationsschicht mit hoher Dielektrizitätskonstante enthält.

8. Flüssigkristalldisplay nach Anspruch 1, dadurch gekennzeichnet, daß auch das FLC-Medium die Verbindung mit amphiphilisierender Wirkung enthält.

9. Schockstabiles Flüssigkristalldisplay nach Anspruch 1, dadurch gekennzeichnet, daß durch Anlegen einer kontinuierlichen periodischen elektrischen Spannung an die Elektroden der Schalt- und Anzeigevorrichtung vor Inbetriebnahme in der ferroelektrischen Phase eine "bookshelf"- oder "quasibookshelf"-Orientierung der Flüssigkristallschicht bewirkt wird.

10. Verfahren zur Verbesserung des Kontrasts in einem FLC-Display, welches neben Trägerplatten, Elektroden, mindestens einem Polarisator und einem FLC-Medium mindestens eine Orientierungsschicht enthält, dadurch gekennzeichnet, daß eine amphiphilisierende Verbindung aus der Gruppe Kryptanden, Coronanden und makrocyclischen Verbindungen der Formel (VI),

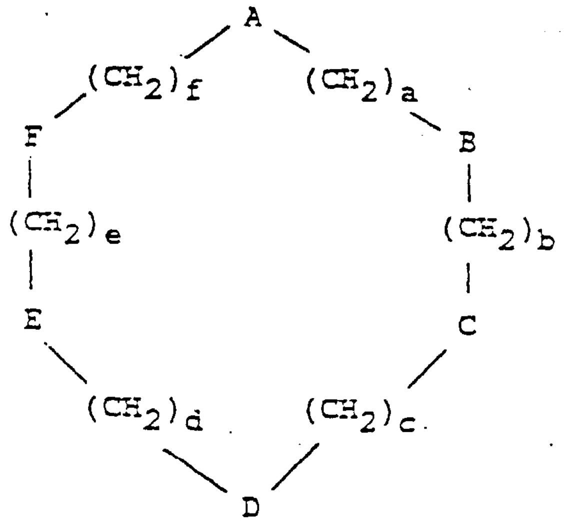

VI

wobei

| | |
|---|---|
| a, b, c, d, e, f | unabhängig voneinander eine ganze Zahl von Null bis 4, wobei a + b + c + d + e + f ≥ 7 ist, und |
| -A-, -B-, -C-, -D-, -E-, -F- | gleich oder verschieden $-CH_2-$, -CHR'-, -CH=CH-, -CR=CR'-, -C≡C-, |

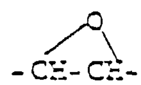,

-CO-, -COO-,

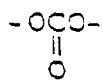,

-CONH-, -CONR'-, -NR'-,

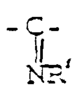, 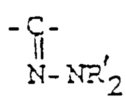, 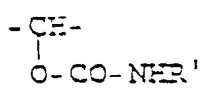, 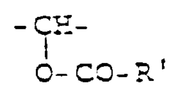, 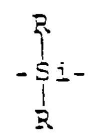,

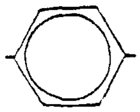 , 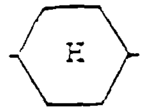 , 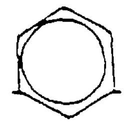 , 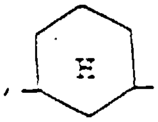 , 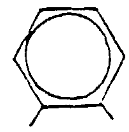 , 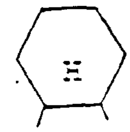

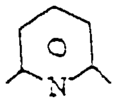 , 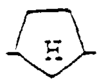 , 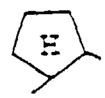 , 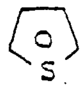 , 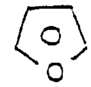 , .

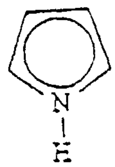 oder 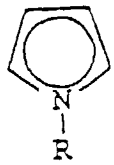

wobei

- R gleich Alkyl mit 1 bis 12 C-Atomen und
- R' gleich Alkyl mit 1 bis 12 C-Atomen, wobei eine $-CH_2$-Gruppe durch -O-, -COO- oder -OCO- ersetzt sein kann, Phenyl oder Cl, F oder CN bedeuten kann,

durch Physisorption oder chemische Ankopplung auf die Orientierungsschicht auf- oder in die Orientierungsschicht eingebracht wird, indem sie als zusätzliche Schicht zwischen Orientierungsschicht und FLC-Schicht aufgebracht wird, durch chemische Reaktion an das Material der Orientierungsschicht angekoppelt wird oder als Mischungskomponente dem Material der Orientierungsschicht zugesetzt wird.

**11.** Verfahren gemäß Anspruch 11, dadurch gekennzeichnet, daß man als Orientierungsschicht ein Polyamid, Polyimid bzw. Polyvinylalkohol einsetzt.

**12.** Verfahren gemäß Anspruch 11, dadurch gekennzeichnet, daß man der Orientierungsschicht 0,01 bis 50 Gew.-%, insbesondere 0,1 bis 25 Gew.-% der amphiphilisierenden Verbindung zusetzt.

**13.** Verfahren nach einem der Ansprüche 10 bis 12, dadurch gekennzeichnet, daß man auch dem FLC-Medium die Verbindung mit amphiphilisierender Wirkung zusetzt.

**14.** Verfahren nach einem der Ansprüche 10 bis 13, dadurch gekennzeichnet, daß man an die Elektroden der Schalt- und Anzeigevorrichtung vor Inbetriebnahme in der ferroelektrischen Phase eine kontinuierliche periodische elektrische Spannung solange anlegt, bis die Flüssigkristallschicht eine "bookshelf"-oder "quasibookshelf"-Orientierung annimmt.

## Claims

**1.** A liquid-crystal display comprising transparent outer plates, electrodes, at least one polarizer, a ferroelectric liquid-crystalline medium and at least one alignment layer which includes, within the layer or on the surface, a component which amphiphilizes the alignment layer, wherein the amphiphilizing component is a coronand, a cryptand or a macrocyclic compound of the formula (VI)

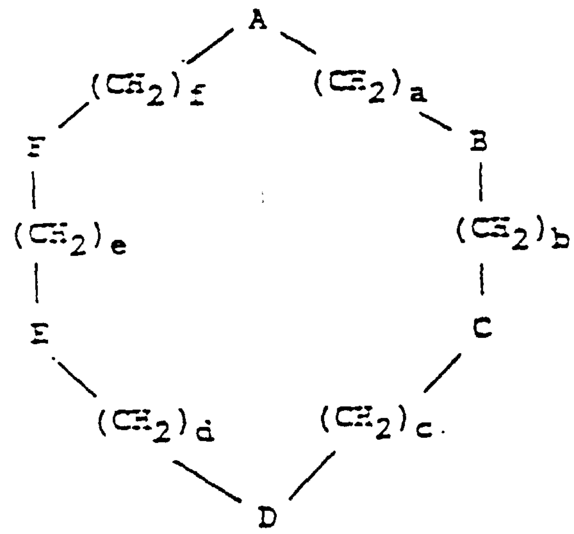

VI

where

| | |
|---|---|
| a, b, c, d, e and f, | independently of one another, are an integer from zero to 4, where a + b + c + d + e + f ≥ 7, and |
| -A-, -B-, -C-, -D-, -E- and -F- | are identical or different and are $-CH_2-$, -CHR'-, -CH=CH-, -CR=CR'-, -C≡C-, |

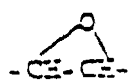

,

-CO-, -COO-,

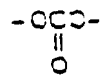

,

-CONH-, -CONR'-, -NR'-,

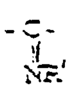 , 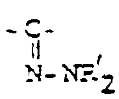 , 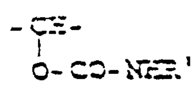 , 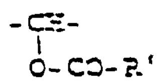 , 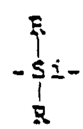 ,

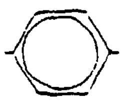, 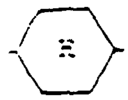, 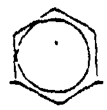, 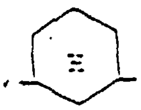, 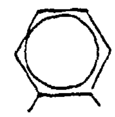, 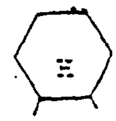

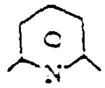, 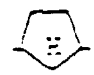, 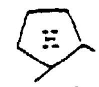, 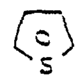, 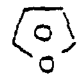,

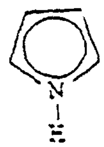 or 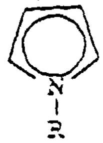

where

R is alkyl having 1 to 12 carbon atoms, and
R' is alkyl having 1 to 12 carbon atoms, in which one $-CH_2-$ group may be replaced by -O-, -COO- or -OCO-, or is phenyl or Cl, F or CN.

**2.** A liquid-crystal display as claimed in claim 1, wherein the amphiphilizing component is an additional layer between the alignment layer and the ferroelectric liquid-crystalline medium.

**3.** A liquid-crystal display as claimed in claim 1, wherein the amphiphilizing component has been introduced directly into the alignment layer.

**4.** A liquid-crystal display as claimed in claim 2, wherein the amphiphilizing component has been linked to the material of the alignment layer by chemical reaction.

**5.** A liquid-crystal display as claimed in any of claims 1 to 4, wherein the alignment layer comprises a polyimide, polyamide or polyvinyl alcohol.

**6.** A liquid-crystal display as claimed in claim 5, wherein the alignment layer contains from 0.01 to 50% by weight, in particular from 0.1 to 25% by weight, of the amphiphilizing component.

**7.** A liquid-crystal display as claimed in claim 1, which additionally contains an insulating layer having a high dielectric constant.

**8.** A liquid-crystal display as claimed in claim 1, wherein the FLC medium also contains the compound having an amphiphilizing action.

**9.** A shock-stable liquid-crystal display as claimed in claim 1, wherein a "bookshelf" or "quasi-bookshelf" alignment of the liquid-crystal layer is achieved by applying a continuous periodic electric voltage to the electrodes of the switching and display device before the latter is switched on in the ferroelectric phase.

**10.** A method of improving the contrast in an FLC display which contains at least one alignment layer in addition to outer plates, electrodes, at least one polarizer and an FLC medium, which comprises introducing an amphiphilizing compound from the group consisting of cryptands, coronands and macrocyclic compounds of the formula (VI)

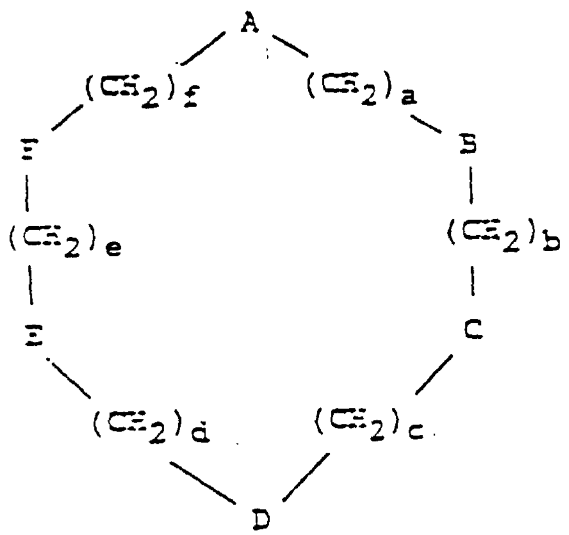

VI

where

| | |
|---|---|
| a, b, c, d, e and f, | independently of one another, are an integer from zero to 4, where $a + b + c + d + e + f \geq 7$, and |
| -A-, -B-, -C-, -D-, -E- and -F- | are identical or different and are $-CH_2-$, -CHR'-, -CH=CH-, -CR=CR'-, $-C\equiv C-$, |

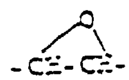,

-CO-, -COO-,

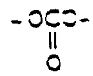,

-CONH-, -CONR'-, -NR'-,

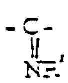, 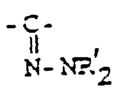, 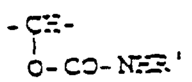, 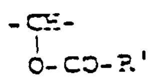, 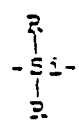,

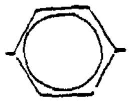 , 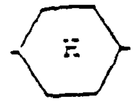 , 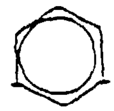 , 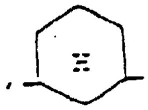 , 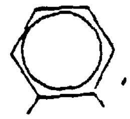 , 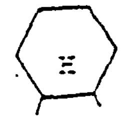

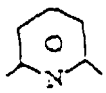 , 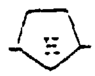 , 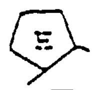 , 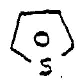 , 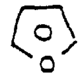 ,

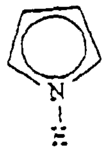 or 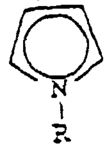

where

R is alkyl having 1 to 12 carbon atoms, and

R' is alkyl having 1 to 12 carbon atoms, in which one $-CH_2-$ group may be replaced by -O-, -COO- or -OCO-, or is phenyl or Cl, F or CN,

onto or into the alignment layer by physisorption or chemical coupling to the alignment layer by applying it as an additional layer between the alignment layer and the FLC layer, coupling it to the material of the alignment layer by chemical reaction or adding it to the material of the alignment layer as a mixture component.

**11.** The method as claimed in claim 10, wherein the alignment layer employed is a polyamide, polyimide or polyvinyl alcohol.

**12.** The method as claimed in claim 11, wherein from 0.01 to 50% by weight, in particular from 0.1 to 25% by weight, of the amphiphilizing compound is added to the alignment layer.

**13.** The method as claimed in any one of claims 10 to 12, wherein the compound having an amphiphilizing action is also added to the FLC medium.

**14.** The method as claimed in any one of claims 10 to 13, wherein a continuous periodic electric voltage is applied to the electrodes of the switching and display device before the latter is switched on in the ferroelectric phase until the liquid-crystal layer adopts a "bookshelf" or "quasi-bookshelf" alignment.

## Revendications

**1.** Afficheur à cristal liquide comportant des plaques de support transparentes, des électrodes, au moins un polariseur, un milieu à cristal liquide ainsi qu'au moins une couche d'alignement qui contient dans la couche ou à la surface un composant qui rend amphiphile la couche d'alignement caractérisé en ce que le composant anphiphilisant est un coronand, un cryptand ou un composé macrocyclique de formule VI

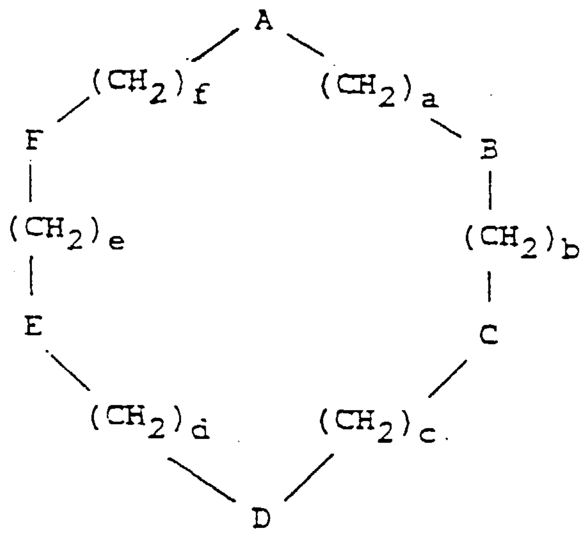

VI

a, b, c, d, e, f indépendamment les uns des autres étant un nombre entier de 0 à 4, $a + b + c + d + e + f \geq 7$, et

-A-, -B-, -C-, -D-, -E-, -F- identiques ou différents, représentent $-CH_2-$, -CHR'-, -CH=CH-, -CR=CR'-, -C≡C-,

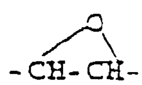,

-CO-, -COO-,

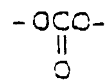,

-CONH-, -CONR'-, -NR'-,

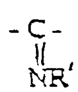, 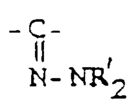, 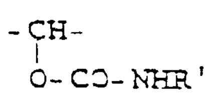, 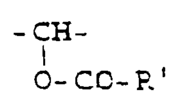, 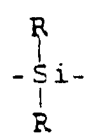,

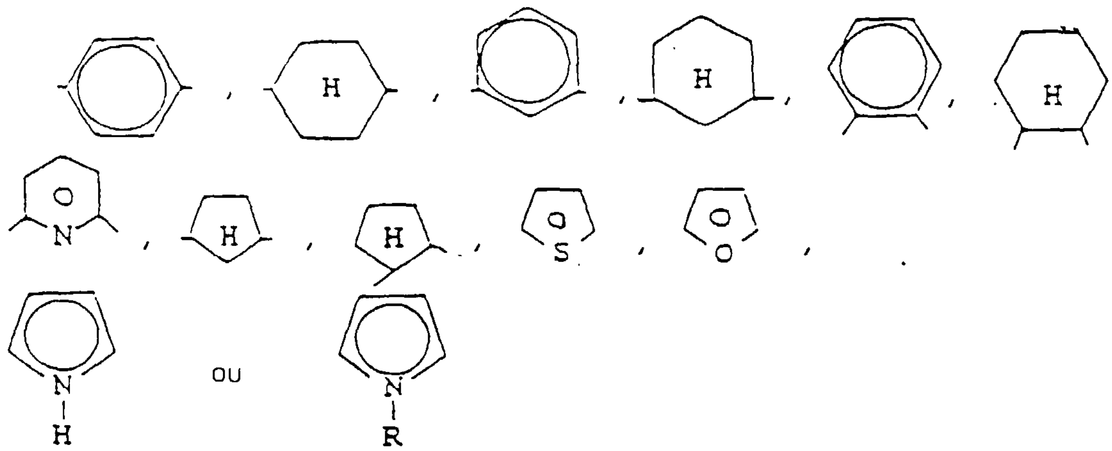

, , , , ,

, , , , , .

ou

R étant alkyle avec 1 à 12 atomes de carbone, et

R' étant alkyle avec 1 à 12 atomes de carbone, un groupe $-CH_2-$ pouvant être remplacé par -O-, -COO- ou -OCO-, pouvant être également phényle ou Cl, F ou CN.

**2.** Afficheur à cristal liquide selon la revendication 1, caractérisé en que le composant amphiphilisant est une couche supplémentaire entre la couche d'alignement et le milieu ferroélectrique à cristal liquide.

**3.** Afficheur à cristal liquide selon la revendication 1, caractérisé en que le composant amphiphilisant est incorporé directement à la couche d'alignement.

**4.** Afficheur à cristal liquide selon la revendication 2, caractérisé en que le composant amphiphilisant est lié à la matière de la couche d'alignement par une réaction chimique.

**5.** Afficheur à cristal liquide selon la revendication 1 à 4, caractérisé en que la couche d'alignement est en un polyimide, un polyamide ou un poly(alcool vinylique).

**6.** Afficheur à cristal liquide selon la revendication 5, caractérisé en que la couche d'alignement contient de 0,01 à 50% en poids, en particulier de 0,1 à 25% en poids du composant amphiphilisant.

**7.** Afficheur à cristal liquide selon la revendication 1, caractérisé en qu'il contient en plus une couche d'isolation ayant une constante diélectrique élevée.

**8.** Afficheur à cristal liquide selon la revendication 1, caractérisé en que le milieu CLF contient le composé ayant l'effet amphiphilisant.

**9.** Afficheur à cristal liquide résistant aux chocs selon la revendication 1, caractérisé en que par application d'une tension électrique périodique continue aux électrodes du dispositif de commutation et d'affichage avant la mise en service, on induit dans la phase ferroélectrique une orientation "bookshelf" ou "quasi-bookshelf" de la couche de cristal liquide.

**10.** Procédé pour améliorer le contraste dans un afficheur à CLF, qui comporte en plus des plaques de support, des électrodes, d'au moins un polariseur et du milieu de CLF, au moins une couche d'alignement, caractérisé en ce qu'un composé amphiphilisant pris dans le groupe comportant des cryptands, des coronands et des composés macrocycliques de formule (VI)

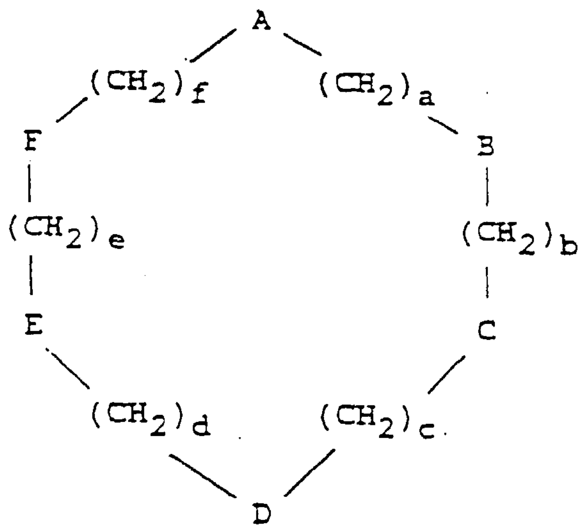

VI

a, b, c, d, e, f indépendamment les uns des autres étant un nombre entier de 0 à 4, $a + b + c + d + e + f \geq 7$, et

-A-, -B-, -C-, -D-, -E-, -F- identiques ou différents, représentent $-CH_2-$, -CHR'-, -CH=CH-, -CR=CR'-, -C≡C-,

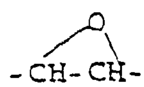

-CO-, -COO-,

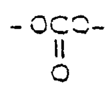

-CONH-, -CONR', -NR'-,

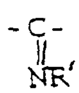 , 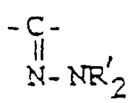 , 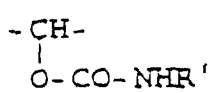 , 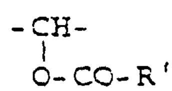 , 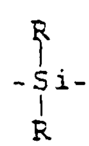 ,

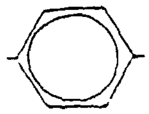 , 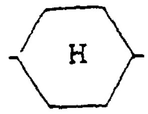 , 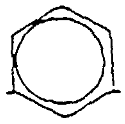 , 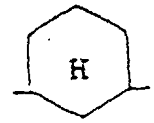 , 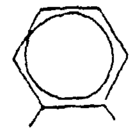 , 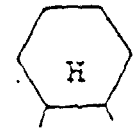

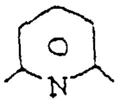 , 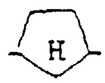 , 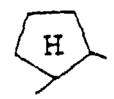 , 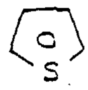 , 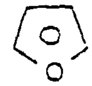 , .

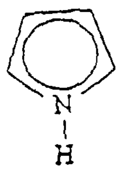 ou 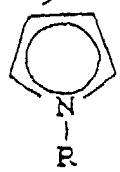

R étant alkyle avec 1 à 12 atomes de carbone, et

R' étant alkyle avec 1 à 12 atomes de carbone, un groupe $-CH_2-$ pouvant être remplacé par -O-, -COO- ou -OCO-, pouvant être également phényle ou Cl, F ou CN,

est déposé par sorption physique ou couplage chimique sur la couche d'alignement ou incorporé à la couche d'alignement, en le déposant comme couche supplémentaire entre la couche d'alignement et la couche de CLF, est par réaction chimique à la couche d'alignement ou ajouté comme composant mixte à la matière de la couche d'alignement.

**11.** Procédé selon la revendication 10, caractérisé en ce qu'on utilise comme couche d'alignement un polyimide, un polyamide respectivement, un poly(alcool vinylique).

**12.** Procédé selon la revendication 11, caractérisé en ce qu'on ajoute à la couche d'alignement de 0,01 à 50% en poids, notamment de 0,1 à 25% en poids du composant amphiphilisant.

**13.** Procédé selon l'une des revendications 10 à 12, caractérisé en ce qu'on ajoute au milieu de CLF le composé ayant un effet amphiphilisant.

**14.** Procédé selon l'une des revendications 10 à 13, caractérisé en ce qu'on applique aux électrodes du dispositif de commutation et d'affichage avant la mise en service dans la phase ferroélectrique une tension périodique continue jusqu'à ce que la couche de cristal liquide adopte une orientation "bookshelf" ou "quasi-bookshelf".